(19) Europäisches Patentamt
European Patent Office
Office européen des brevets

(11) Veröffentlichungsnummer: **0 135 040**
**B1**

(12) # EUROPÄISCHE PATENTSCHRIFT

(45) Veröffentlichungstag der Patentschrift: **24.06.87**

(51) Int. Cl.[4]: **C 09 B 62/503,** D 06 P 1/38

(21) Anmeldenummer: **84108573.1**

(22) Anmeldetag: **20.07.84**

(54) **Kupferkomplex-Formazanverbindungen, Verfahren zu ihrer Herstellung und ihre Verwendung als Farbstoffe.**

(30) Priorität: **23.07.83 DE 3326638**

(43) Veröffentlichungstag der Anmeldung: **27.03.85 Patentblatt 85/13**

(45) Bekanntmachung des Hinweises auf die Patenterteilung: **24.06.87 Patentblatt 87/26**

(84) Benannte Vertragsstaaten: **BE CH DE FR GB IT LI**

(56) Entgegenhaltungen:
**EP - A - 0 028 787**
**EP - A - 0 028 788**
**GB - A - 1 333 248**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Schwaiger, Günther, Dr., Johannesallee 41, D-6230 Frankfurt am Main 80 (DE)**

EP 0 135 040 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung liegt auf dem technischen Gebiet der Metallkomplexformazanfarbstoffe mit faserreaktiven Eigenschaften.

Aus der Britischen Patentschrift Nr. 1194504 sind bereits sogenannte bicyclische Metallkomplexformazanfarbstoffe, die eine faserreaktive Gruppe der Vinylsulfonreihe enthalten, bekannt; ein Farbstoff dieses Typs ist die Verbindung der Formel

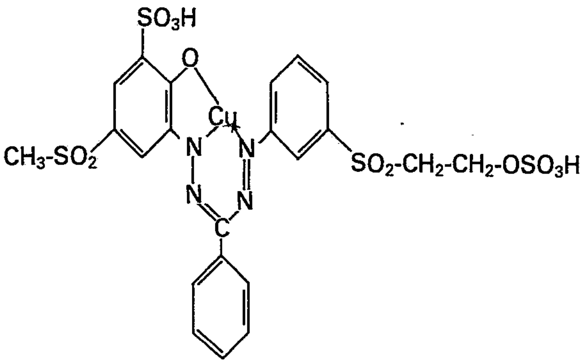

Diese Farbstoffe besitzen jedoch gewisse Mängel in ihren Echtheits- und anwendungstechnischen Eigenschaften.

Des weiteren sind sowohl aus der obengenannten Britischen Patentschrift als auch aus den Europäischen Patentschriften Nrn. 0028787 und 0028788 sogenannte tricyclische Metallkomplexformazanfarbstoffe mit einer faserreaktiven Gruppe der Vinylsulfonreihe bekannt, die beispielsweise das 2-Carboxy-5-sulfo-phenylhydrazin als Hydrazonkomponente besitzen. Abgesehen davon, dass diese Hydrazinverbindung verhältnismässig teuer ist, zeigen auch diese bekannten Farbstoffe im Zweiphasen-Kaltverweil-Verfahren und im Klotz-Luftgang-Verfahren («Pad-Airing») noch nicht befriedigende anwendungstechnische Eigenschaften, da ihre Fixiergeschwindigkeit für diese Färbeweisen noch zu gering ist.

Während die Kupferformazanfarbstoffe der eben genannten Patentschriften eine faserreaktive Gruppe der Vinylsulfonreihe enthalten, sind in der Britischen Patentschrift Nr. 1333248 u.a. Kupferformazan- und Kupferformazanazoverbindungen beschrieben, die eine Aminogruppe besitzen und mit Hilfe dieser Aminogruppe als Zwischenprodukte für (azogruppenhaltige) Kupferformazanfarbstoffe mit einer völlig anders aufgebauten faserreaktiven Gruppierung, die sich von einem Cyanurchloridrest ableitet, dienen.

Mit der vorliegenden Erfindung werden nunmehr neue wertvolle Kupferkomplex-Formazanverbindungen mit einer faserreaktiven Gruppe der Vinylsulfonreihe gefunden, die diese guten anwendungstechnischen Eigenschaften besitzen und Färbungen und Drucke mit sehr guten Echtheitseigenschaften liefern. Diese neuen Kupferkomplex-Formazan-Verbindungen entsprechen der allgemeinen Formel (1)

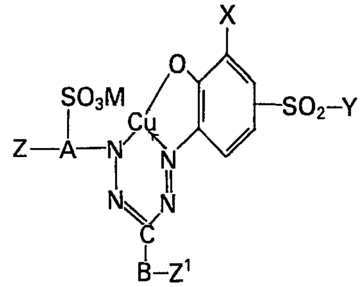

(1)

in welcher die einzelnen Formelreste die folgenden Bedeutungen besitzen:

A ist ein Benzolring oder ein Naphthalinring, die beide zwingend durch die angegebene Sulfogruppe $-SO_3M$ (mit M der nachstehend angegebenen Bedeutung) in ortho-Stellung zum N-Atom der Hydrazonkomponente substituiert sind und die durch einen bis drei Substituenten, vorzugsweise zwei, insbesondere bevorzugt durch einen Substituenten, aus der Gruppe Halogen, wie Fluor, Chlor, Brom und Jod, Nitro, Alkyl von 1 bis 5 C-Atomen, wie insbesondere Methyl, niederes Alkylaminoalkyl, wie insbesondere Methylaminomethyl, Alkoxy von 1 bis 4 C-Atomen, wie Methoxy und Ethoxy, Hydroxy, Alkylsulfonyl von 1 bis 4 C-Atomen, wie Methylsulfonyl und Ethylsulfonyl, Phenylsulfonyl, Sulfamoyl, N-Mono- und N,N-Dialkylsulfamoyl mit jeweils 1 bis 4 C-Atomen im Alkyl, niederes Alkanoylamino, wie Acetylamino, Aroylamino, wie Benzoylamino, N-Mono- und N,N-Dialkylamino mit jeweils 1 bis 4 C-Atomen im Alkyl, Phenylsulfamoyl und Phenyl substituiert sein können,

B ist ein Benzol- oder ein Naphthalinkern, die beide durch Substituenten, vorzugsweise 1 oder 2 Substituenten, aus der Gruppe Hydroxy, Nitro, Halogen, wie Fluor, Brom und Chlor, Alkyl von 1 bis 5 C-Atomen, vorzugsweise Methyl und Ethyl, Alkoxy von 1 bis 4 C-Atomen, vorzugsweise Methoxy und Ethoxy, Carbalkoxy mit 1 bis 4 C-Atomen im Alkylrest, wie Carbomethoxy und Carbethoxy, Amino, N-Mono- und N,N-Dialkylamino mit jeweils 1 bis 4 C-Atomen im Alkyl und Phenylsulfamoyl substituiert sein können, oder

B ist der Rest des gegebenenfalls durch niederes Alkyl, niederes Alkoxy, Chlor, Benzyl, Phenethyl und/oder Phenyl substituierten Furans, Thiophens, Pyrrols, Imidazols, Pyrazols, Pyridins, Chinolins oder Benzimidazols, oder

B ist eine direkte Bindung oder ein gerad- oder verzweigt-kettiger Alkanrest von 1 bis 8 C-Atomen, wie der Rest des Methans, Ethans, Isopropans, n-Butans, sek.-Butans, tert.-Butans, n-Heptans oder n-Octans, oder ein gerad- oder verzweigt-kettiger Alkenrest von 2 bis 8 C-Atomen, wie der des Ethylens oder Propyl-(2)-ens, wobei diese Alkan- und Alkenreste noch durch den Phenylrest substituiert sein können, der wiederum durch Substituenten aus der Gruppe Methyl, Ethyl, Methoxy, Ethoxy, Fluor, Chlor, Brom und Sulfamoyl substituiert sein kann,

M ist ein Wasserstoffatom oder das Äquivalent eines Metalls, vorzugsweise eines Alkalimetalls und Erdalkalimetalls, wie insbesondere Natrium, Kalium oder Lithium oder des Calciums,

X ist ein Wasserstoffatom oder eine Sulfogruppe,

Z ist ein Wasserstoffatom oder eine wasserlöslichmachende Gruppe, wie die Carboxy- oder Phosphonsäuregruppe, bevorzugt jedoch als wasserlöslichmachende Gruppe eine Sulfogruppe, die – neben der zwingend geforderten Sulfogruppe in o-Stellung zum N-Atom der Hydrazonkomponente A – an A einmal oder zweimal an ein aliphatisches oder aromatisches Kohlenstoffatom von A, vorzugsweise an einen aromatischen Kern, gebunden ist,

$Z^1$ ist ein Wasserstoffatom oder eine wasserlöslichmachende Gruppe, wie die Carboxy- oder Phosphonsäuregruppe, bevorzugt jedoch als wasserlöslichmachende Gruppe eine Sulfogruppe, die an B einmal oder zweimal an ein aliphatisches oder aromatisches Kohlenstoffatom von B, vorzugsweise an einen aromatischen Kern, gebunden ist,

wobei Z und $Z^1$ zusammen nicht mehr als drei Sulfogruppen bedeuten, falls X eine Sulfogruppe ist,

Y ist die Vinylgruppe oder eine Gruppe der Formel $-CH_2-CH_2-E$, in welcher E einen alkalisch eliminierbaren Substituenten darstellt.

Die vorstehend oder nachstehend mit «nieder» bezeichneten Gruppen sind solche Gruppen, deren Alkylreste jeweils aus 1 bis 4 C-Atomen aufgebaut sind.

Die alkalisch eliminierbare Gruppe E ist beispielsweise ein Halogenatom, wie Chlor- oder Bromatom, eine niedere Alkanoyloxygruppe, wie die Acetyloxygruppe, eine Aroyloxygruppe, wie die Benzoyloxy- oder Sulfobenzoyloxygruppe, eine Arylsulfonyloxygruppe, wie die Toluyloxygruppe, eine niedere Dialkylaminogruppe, wie die Dimethylamino- oder Diäthylaminogruppe, eine Phosphatogruppe (entsprechend der allgemeinen Formel $-OPO_3M_2$ mit M der obengenannten Bedeutung), eine Thiosulfatogruppe (entsprechend der allgemeinen Formel $-S-SO_3M$ mit M der obengenannten Bedeutung) oder eine Sulfatogruppe (entsprechend der allgemeinen Formel $-OSO_3M$ mit M der obengenannten Bedeutung).

Bevorzugt ist Y in den neuen Verbindungen der allgemeinen Formel (1) die Vinylgruppe und insbesondere die β-Sulfatoethylgruppe.

Sofern B ein oben genannter phenylsubstituierter Alkan- oder Alkenrest ist, ist er bevorzugt der Rest des Benzyls oder Styryls. Z und $Z^1$ können zueinander gleiche oder voneinander verschiedene Bedeutungen haben. Sofern Z und $Z^1$ jeweils zweimal an das Molekül gebunden sind, kann jedes für sich verschiedene Bedeutungen haben.

Bevorzugt sind Verbindungen der allgemeinen Formel (1), in welchen Z eine Sulfogruppe ist.

Die neuen Verbindungen der allgemeinen Formel (1) können in saurer Form vorliegen. Bevorzugt sind sie in Form ihrer Salze, insbesondere der oben genannten Alkali- und Erdalkalimetallsalze. Sie finden, bevorzugt in Form der Alkalimetallsalze, Verwendung zum Färben (im allgemeinen Sinne einschliesslich des Bedruckens) von hydroxygruppenhaltigen, amino- und carbonamidgruppenhaltigen Materialien.

Von den erfindungsgemässen Verbindungen der allgemeinen Formel (1) sind diejenigen Kupferkomplexverbindungen bevorzugt, in welchen A den Benzolring bedeutet, der durch 1 Substituenten aus der Gruppe Chlor, Brom, Nitro, Methyl, Ethyl, Methoxy, Ethoxy und Carboxy substituiert sein kann, B den Benzolkern bedeutet, der durch 1 oder 2 Substituenten aus der Gruppe Chlor, Methyl, Methoxy, Ethoxy, Carboxy und Nitro substituiert sein kann, Z die obengenannte, insbesondere bevorzugte Bedeutung besitzt und an A vorzugsweise in m- oder p-Stellung zum N-Atom der Hydrazonkomponente gebunden ist, $Z^1$ die obengenannte, insbesondere bevorzugte Bedeutung besitzt und an B vorzugsweise in m- oder p-Stellung zum C-Atom der Aldehydkomponente gebunden ist, Y die Vinylgruppe bedeutet oder vorzugsweise die β-Sulfatoethyl-Gruppe (der allgemeinen Formel $-CH_2-CH_2-OSO_3M$ mit M der obengenannten Bedeutung) ist, wobei die Gruppe $-SO_2-Y$ an den Benzolkern in meta-Stellung zu X gebunden ist, falls X für eine Sulfogruppe oder ein Wasserstoffatom steht, und in ortho-Stellung zu X gebunden ist, falls X für ein Wasserstoffatom steht.

Bevorzugt sind weiterhin Verbindungen der Formel (1), in welcher A den Benzolring darstellt, B den Benzolkern bedeutet, der durch eine Methyl-, Methoxy- oder Ethoxygruppe oder durch ein Chloratom substituiert sein kann, Z für 1 Sulfogruppe steht, $Z^1$ ein Wasserstoffatom oder 1 Sulfogruppe ist und M und Y die obengenannten, insbesondere bevorzugten Bedeutungen haben.

Von den erfindungsgemässen Kupferkomplex-Formazanverbindungen sind insbesondere diejenigen der nachfolgenden Formeln (1a) und (1b)

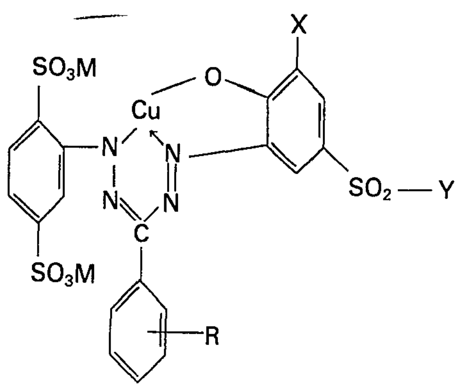

(1a)

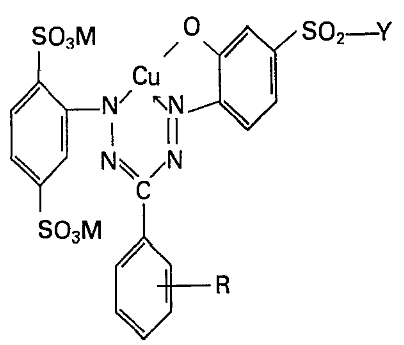

(1b)

bevorzugt, in welchen M die obengenannte, insbesondere bevorzugte Bedeutung besitzt, X für ein Wasserstoffatom oder eine Sulfogruppe steht, Y die Vinylgruppe und bevorzugt die β-Sulfatoethyl-Gruppe ist und R ein Wasserstoffatom oder eine Methyl-, Ethyl-, Methoxy- oder Ethoxygruppe oder ein Chloratom oder eine Sulfogruppe bedeutet; bevorzugt steht R in p-Stellung an den Benzolkern gebunden, und falls R gleich Sulfo ist, ebenso auch bevorzugt in m-Stellung.

Weiterhin sind bevorzugt Verbindungen der allgemeinen Formeln (1c) und (1d)

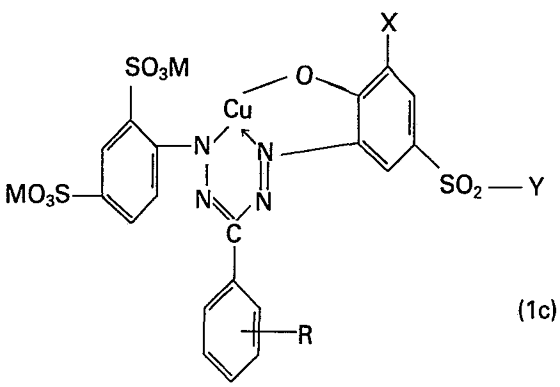

(1c)

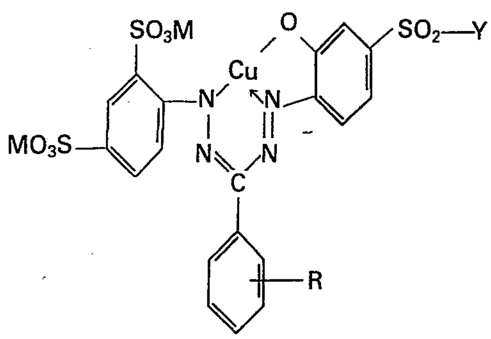

(1d)

in welchen M, R, X und Y die für die Formeln (1a) und (1b) angegebenen Bedeutungen haben.

Hervorgehoben werden können ebenfalls Verbindungen der allgemeinen Formeln (1e) und (1f)

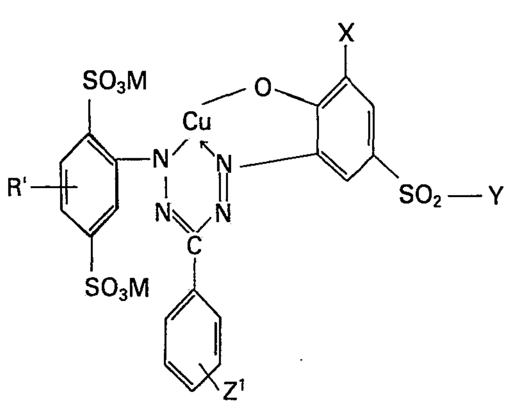

(1e)

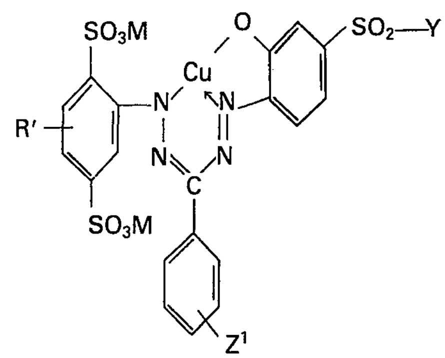

(1f)

in welchen M, X und Y die für Formeln (1a) und (1b) angegebenen Bedeutungen haben, R′ für ein Wasserstoffatom, ein Chloratom, eine Methyl-, Ethyl-, Methoxy- oder Ethoxygruppe steht und $Z^1$ ein Wasserstoffatom oder eine in p- oder m-Stellung gebundene Sulfogruppe ist.

Die vorliegende Erfindung betrifft weiterhin ein Verfahren zur Herstellung der oben genannten und definierten Verbindungen der allgemeinen Formel (1), das dadurch gekennzeichnet ist, dass man eine aromatische Hydrazonverbindung der allgemeinen Formel (2)

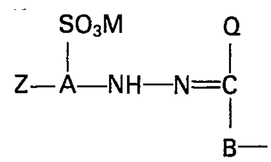

(2)

in welcher A, B, M, Z und $Z^1$ die obengenannten Bedeutungen haben und Q Wasserstoff oder einen durch Azokupplung ersetzbaren Substituenten, beispielsweise die Formylgruppe oder die gegebenenfalls abgewandelte Carboxygruppe, wie die Cyan-, eine Carbalkoxy- oder Carbonsäureamidgruppe, bedeutet, mit der Diazoniumverbindung eines aromatischen Amins der allgemeinen Formel (3)

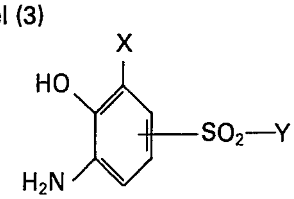

(3)

in welcher X und Y die obengenannten Bedeutungen haben, und mit einem kupferabgebenden Mittel umsetzt, wobei man die Komponenten so auswählt, dass Z und $Z^1$ im Verhältnis zu X die obengenannten Bedingungen erfüllen.

Das erfindungsgemässe Verfahren kann in üblicher und analog bekannter Verfahrensweise zur Herstellung von Metallkomplexformazanfarbstoffen ausgeführt werden. Vorzugsweise wird das erfindungsgemässe Verfahren bei einem pH-Wert zwischen 4 und 7, insbesondere zwischen 5 und 6, und bei einer Temperatur zwischen etwa 0 und 80°C durchgeführt.

Die Zugabe der Reaktionskomponenten kann beliebig sein, jedoch läuft die Kupplungsreaktion im pH-Bereich zwischen etwa 4 und etwa 6 nur bei

Anwesenheit von Kupferionen als Dreikomponentenreaktion ab.

Als kupferabgebende Verbindungen kommen beispielsweise die einfachen und die komplexen Salze des Kupfers in Frage, wie beispielsweise Kupfersulfat, Kupferchlorid, Kupferacetat und Kupfercarbonat und die Kupfersalze der Salicylsäure oder Weinsäure. Verwendet man Kupfersalze von Mineralsäuren, so arbeitet man zweckmässig in Gegenwart eines säureabstumpfenden Mittels, wie beispielsweise eines Alkalihydroxides oder -carbonats oder eines Alkalisalzes einer niederen Alkancarbonsäure, wie der Essigsäure, oder eines basischen Alkalisalzes der Phosphorsäure. Solche Alkaliverbindungen sind insbesondere die Natrium- und Kaliumverbindungen, bevorzugt beispielsweise Natriumhydroxid, Kaliumhydroxid, Natrium- und Kaliumcarbonat, Natriumbicarbonat, Natriumacetat, Dinatriumhydrogenphosphat und Trinatriumphosphat.

Das kupferabgebende Mittel wird in äquimolaren Mengen verwendet, so dass auf ein Molekül der Verbindung der Formel (1) ein Schwermetallatom entfällt. Die Metallisierung geht üblicherweise schon bei Raumtemperatur (15 bis 25 °C) zu Ende; vielfach ist aber ein schwaches Erwärmen, z.B. bis auf 60 bis 80 °C, zweckmässig.

Eine Verfahrensweise zur Herstellung der Kupferkomplexformazanverbindungen der allgemeinen Formel (1) ist beispielsweise die folgende: Man löst die Hydrazonverbindung der allgemeinen Formel (2) mit einem Alkali, wie Natronlauge oder Natriumcarbonat, in Wasser bei Raumtemperatur und hält den pH-Wert bevorzugt bei 6 bis 7. Anschliessend gibt man die Diazoniumsalzlösung des Amins der Formel (3) hinzu, wobei man den pH-Wert der Reaktionslösung weder alkalisch noch zu stark sauer werden lässt, um zum einen beispielsweise die Sulfatoethylsulfonylgruppe im alkalischen nicht zu schädigen und zum anderen eine Ausfällung des Hydrazons und damit eine heterogene Reaktion im sauren Medium zu vermeiden. Vorzugsweise arbeitet man bei einem pH-Wert zwischen 4 und 7, insbesondere 5 und 7. Es ist aber auch möglich, das Hydrazon gelöst und ungelöst zu der noch schwach sauren (pH = 3–4) Diazolösung zuzugeben. Die Reaktionstemperatur soll zunächst zweckmässig 15 °C, vorteilhaft 10°C möglichst nicht überschreiten.

Die dritte Komponente, das kupferabgebende Mittel, wie beispielsweise Kupfersulfat, wird in äquimolarer Menge gleichzeitig mit der Diazokomponente, bevorzugt nach der Diazokomponente, entweder in fester Form oder in Form einer wässrigen Lösung, zugegeben.

Auch die Kupferungsreaktion wird vorteilhaft bei einem pH-Wert von 4 bis 7, insbesondere 4 bis 6, durchgeführt. Metallisierungs- und Kupplungsreaktion laufen gleichzeitig nebeneinander her. Die Metallisierungsreaktion läuft verhältnismässig schnell ab. Vor der Isolierung der hergestellten Kupferkomplexformazanverbindung ist es, wie oben erwähnt, vorteilhaft, die Reaktionsmischung zu erwärmen, beispielsweise auf 40–60 °C oder sogar bis auf etwa 80 °C, um die Kupplung und Metallisierung zu beschleunigen oder quantitativ durchzuführen.

Anschliessend stellt man auf einen pH-Wert von 5 bis 6 ein und isoliert die hergestellte erfindungsgemässe Kupferkomplexformazanverbindung in üblicher Weise, beispielsweise durch Aussalzen mittels eines Elektrolyten, wie Natriumchlorid oder Kaliumchlorid. Die Verbindung kann gegebenenfalls auch durch Eindampfen der Lösung, wie beispielsweise Sprühtrocknung, isoliert werden.

Die erfindungsgemässen Verbindungen mit Y gleich der Vinylgruppe können in erfindungsgemässer Weise auch hergestellt werden, indem man beispielsweise eine Kupferkomplexformazanverbindung der Formel (1) mit der β-Sulfatoäthylsulfonylgruppe in einer gemäss der für diese Reaktion an und für sich üblichen Weise in alkalisch-wässriger Lösung bei einem pH-Wert zwischen 8 und 10, beispielsweise mittels Natronlauge oder Natriumcarbonat, und bei erhöhter Temperatur, beispielsweise etwa 40 bis 60 °C, behandelt.

Ebenso können die erfindungsgemässen β-Thiosulfatoethylsulfonyl-Verbindungen der allgemeinen Formel (1) in erfindungsgemässer Weise hergestellt werden, indem man eine erfindungsgemässe Vinylsulfonyl-Verbindung mit einem Salz der Thioschwefelsäure, wie beispielsweise Natriumthiosulfat, – vorteilhaft in einem Überschuss, vorzugsweise von 20 bis 40 Mol-%, des Thiosulfats, – in wässriger, schwach saurer Lösung, vorteilhaft bei einem pH-Wert zwischen 5 und 6,8, insbesondere 5,7 bis 6,2, und bei erhöhter Temperatur, wie beispielsweise 30 bis 80 °C, insbesondere 60 bis 75 °C, umsetzt.

Eine weitere erfindungsgemässe Verfahrensvariante zur Herstellung von Verbindungen der allgemeinen Formel (1) mit E gleich einer Estergruppe gemäss der anfangs erwähnten Verfahrensweise mit den Ausgangsverbindungen der allgemeinen Formel (2) und (3) und dem kupferabgebenden Mittel besteht darin, dass man als Ausgangsverbindung der allgemeinen Formel (3) ein Aminophenol einsetzt, bei dem die Gruppe $-SO_2-Y$ eine β-Hydroxyäthylsulfonylgruppe ist. Bei dieser erfindungsgemässen Verfahrensvariante kann die Umsetzung zu den Kupferkomplexformazanverbindungen entsprechend der allgemeinen Formel (1), in der Y zunächst die β-Hydroxyethylgruppe ist, bei einem pH-Wert zwischen 4 und 14 erfolgen, wobei die Kupplungsreaktion selbst zunächst bei einem pH-Wert zwischen 10 und 13, vorzugsweise etwa 12, sowie die Kupferungsreaktion in Gegenwart von Komplexbildnern, wie Weinsäure oder Zitronensäure, bei einem pH-Wert zwischen etwa 8 und 14 durchgeführt werden kann. Die so hergestellte β-Hydroxyethylsulfonyl-Kupferkomplexformazanverbindung kann sodann erfindungsgemäss in an und für sich üblicher und bekannter Weise durch Veresterung in eine Verbindung der allgemeinen Formel (1) übergeführt werden, in welcher Y eine veresterte Ethylgruppe bedeutet, wie beispielsweise eine β-Sulfo-, Phosphato-, Aryloyloxy- oder Alkanoyloxyethylgruppe. Vorzugsweise erfolgt die Veresterung zur Sulfatoverbindung mittels einem Sulfatierungsmittel, wie vorzugsweise Amidosulfonsäure oder Chlorsulfonsäure in Gegenwart von Pyridin.

Die als Ausgangsverbindungen dienenden Hydrazonverbindungen der allgemeinen Formel (2) gewinnt man aus den entsprechenden Phenyl- und Naphthylhydrazinen der allgemeinen Formel (4)

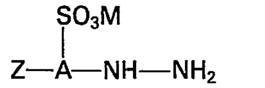 (4)

(mit A, M und Z der oben genannten Bedeutung), – die wiederum in an und für sich üblicher und bekannter Weise, beispielsweise aus den entsprechenden Diazoniumverbindungen mit Salzen der schwefligen Säure und Hydrolyse der intermediären N-Sulfonsäuren mittels Mineralsäuren hergestellt werden können, – gegebenenfalls auch ohne Zwischenisolierung dieser Hydrazine, durch Umsetzung mit einem Aldehyd der allgemeinen Formel (5)

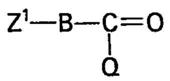 (5)

(mit $Z^1$, B und Q der oben genannten Bedeutung) bei einem pH-Wert zwischen 4 und 8, vorzugsweise 5 und 6.

Hydrazonverbindungen der allgemeinen Formel (2) mit Q der erwähnten abspaltbaren Gruppe erhält man auch in an und für sich üblicher Weise, wenn man eine zweifach ankuppelbare Methin- oder Methylenverbindung, die den Strukturanteil des Formelrestes $Z^1$-B- enthält, mit der Diazoniumverbindung eines Amins der allgemeinen Formel (6)

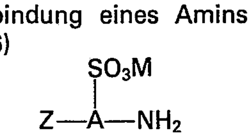 (6)

(mit A, M und Z der obengenannten Bedeutungen) kuppelt. Als zweifach ankuppelbare Methylen- oder Methinverbindungen, welche nach erfolgter Kupplung am Methinkohlenstoff noch eine gegebenenfalls abgewandelte Carboxygruppe aufweisen, verwendet man beispielsweise Malonsäurediäthylester und vorzugsweise beispielsweise Phenylformylessigsäurealkylester, wie Phenylformylessigsäureethylester oder das entsprechende Nitril, ferner Chlorphenylformylessigsäurealkylester, Benzylformylessigsäurealkylester, Phenylcyanessigsäure, Phenylcyanessigsäurealkylester, Phenylessigsäureamid, α-Phenyl-acetessigsäurealkylester, α-Phenylacetessigsäurenitril oder Naphthylformylessigsäurealkylester.

Aromatische Amine der allgemeinen Formel (6) sind beispielsweise Anilin-2-sulfonsäure, Anilin-2,4-disulfonsäure, Anilin-2,5-disulfonsäure, 5- und 4-Methyl-anilin-2-sulfonsäure, 2,4-Dimethyl-anilin-6-sulfonsäure, 4,5-Dimethylanilin-2-sulfonsäure, 2-Methyl-anilin-4,6-disulfonsäure, 4-Methyl-anilin-2,5-disulfonsäure, 4- und 5-Methoxy-anilin-2-sulfonsäure, 4-Methoxy-5-chlor-anilin-2-sulfonsäure, 4,5-Dimethoxy-anilin-2-sulfonsäure, 4- und 5-Ethoxy-anilin-2-sulfonsäure, 4- und 5-Hydroxy-anilin-2-sulfonsäure, 5-Hydroxy-anilin-2,4-disulfonsäure, 4- und 5-Carboxy-anilin-2-sulfonsäure, 4-Hydroxy-3-carboxy-anilin-2-sulfonsäure, 4- und 5-Nitro-anilin-2-sulfonsäure, 2,4-Dinitro-anilin-6-sulfonsäure, 5-Nitro-4-chlor-anilin-2-sulfonsäure, 4-Fluor-anilin-2-sulfonsäure, 3-, 4- und 5-Chloranilin-2-sulfonsäure, 4,5-Dichlor-anilin-2-sulfonsäure, 2,4-Dichlor-anilin-6-sulfonsäure, 2,4,5-Trichlor-anilin-2-sulfonsäure, 4-Chlor-5-carboxy-anilin-2-sulfonsäure, 2,5-Dichlor-4-nitro-anilin-6-sulfonsäure, 4- und 5-Brom-anilin-2-sulfonsäure, 2,4- und 3,4-Dibrom-anilin-6-sulfonsäure, 4- und 5-Jod-anilin-2-sulfonsäure, 4- und 5-Acetamino-anilin-2-sulfonsäure, 1,4-Phenylendiamin-2,5-disulfonsäure, 1,3-Phenylendiamin-4,6-disulfonsäure, 1-Naphthylamin-2-sulfonsäure, 2-Naphthylamin-1-sulfonsäure, 1-Naphthylamin-2,4-disulfonsäure, 1-Naphthylamin-2,5-disulfonsäure, 2-Naphthylamin-1,5-disulfonsäure, 2-Naphthylamin-1,7-disulfonsäure, 2-Naphthylamin-3,6-disulfonsäure, 2-Naphthylamin-3,7-disulfonsäure, 1-Naphthylamin-2,4,7-trisulfonsäure, 2-Naphthylamin-3,6,8-trisulfonsäure und 2-Naphthylamin-1,5,7-trisulfonsäure.

Aldehyde entsprechend der allgemeinen Formel (5) sind beispielsweise Benzaldehyd, 2-, 3- oder 4-Methyl-benzaldehyd, 4-Methyl-benzaldehyd-3-sulfonsäure, 2-, 3- oder 4-Methoxybenzaldehyd, 4-Methoxy-3-chlor-benzaldehyd, 2-, 3- oder 4-Nitro-benzaldehyd, 2-, 3- oder 4-Hydroxybenzaldehyd, 2-, 3- oder 4-Chlor-benzaldehyd, 2,4-Dichlor-benzaldehyd, 2-Chlor-benzaldehyd-5-sulfonsäure, 4-Chlor-benzaldehyd-2-sulfonsäure, Benzaldehyd-2-sulfonsäure, Benzaldehyd-3-sulfonsäure, Benzaldehyd-4-sulfonsäure, Benzaldehyd-2,4-disulfonsäure, 1-Naphthaldehyd, 2-Naphthaldehyd, Furan-2-aldehyd, Thiophen-2-aldehyd, Pyrrol-2-aldehyd, Imidazol-2-aldehyd, Pyrazol-5-aldehyd, Pyridin-2-aldehyd, Pyridin-3-aldehyd, Pyridin-4-aldehyd, Pyrimidin-5-aldehyd, Chinolin-4-aldehyd, Benzimidazol-2-aldehyd, Formaldehyd, Acetaldehyd, Propionaldehyd, n-Butylaldehyd, Oenanthaldehyd, Acrylaldehyd, Crotonaldehyd, Phenacetaldehyd, Zimtaldehyd und Vanillin.

Leicht zugängliche und bevorzugte Diazokomponenten der allgemeinen Formel (3) sind beispielsweise 4-β-Sulfatoethylsulfonyl-2-aminophenol, 5-β-Sulfatoethylsulfonyl-2-aminophenol, 4-β-Sulfatoethylsulfonyl-2-aminophenol-6-sulfonsäure sowie deren Vinylsulfonyl- und β-Thiosulfatoethylsulfonyl-Abkömmlinge, wie zum Beispiel 4-β-Vinylsulfonyl-2-aminophenyl-6-sulfonsäure und 4-β-Thiosulfatoethylsulfonyl-2-aminophenol-6-sulfonsäure.

Die erfindungsgemässen Kupferkomplexformazanverbindungen besitzen wertvolle Farbstoffeigenschaften. Sie werden bevorzugt zum Färben (im allgemeinen Sinne) von hydroxy-, amino- und/oder carbonamidgruppenhaltigen Materialien, beispielsweise in Form von Flächengebilden, wie Papier und Leder, oder in der Masse, wie Polyamid und Polyurethan, insbesondere von solchen Materialien in Faserform, verwendet.

Die vorliegende Erfindung betrifft demnach auch die Verwendung der Verbindungen der allgemeinen Formel (1) zum Färben (einschliesslich Massefärbung und Druckfärbung) dieser Materialien bzw. Verfahren zum Färben solcher Materialien in an und für sich üblicher Verfahrensweise, bei welchen eine Verbindung der allgemeinen Formel (1) als Farbmittel eingesetzt wird. Bevorzugt kommen die Materialien in Form von Fasermaterialien zur Anwendung, insbesondere in Form von Textilfasern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondre in Form der Fasern, beispielsweise Wolle und andere Tierhaare, Seide, Leder, Polyamid-6,6, Polyamid-6, Polyamid-11 und Polyamid-4.

Die erfindungsgemässen Verbindungen lassen sich auf den genannten Substraten, insbesondere auf den genannten Fasermaterialien, nach den für wasserlösliche Farbstoffe, insbesondere für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie beispielsweise Natriumchlorid oder Natriumsulfat, sehr gute Farbausbeuten. Man färbt bei Temperaturen zwischen 40 und 100 °C, gegebenenfalls bei Temperaturen bis zu 120 °C unter Druck, gegebenenfalls in Gegenwart von üblichen Färbereihilfsmitteln, in wässrigem Bad. Man kann dabei so vorgehen, dass man das Material in das warme Bad einbringt und dieses allmählich auf die gewünschte Färbetemperatur erwärmt und den Färbeprozess bei dieser Temperatur zu Ende führt. Die das Ausziehen des Farbstoffes beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten erhalten, wobei durch Verweilen bei Raumtemperatur oder erhöhter Temperatur, beispielsweise bis zu etwa 60 °C, durch Dämpfen oder mit Trokkenhitze in üblicher Weise fixiert werden kann.

Ebenfalls nach den üblichen Druckverfahren für Cellulosefasern erhält man farbstarke Drucke mit gutem Stand der Konturen und einem klaren Weissfond. Der Ausfall der Drucke ist von wechselnden Fixierbedingungen nur wenig abhängig. Die Druckverfahren können Einphasen-Verfahren sein, nach denen das Material mit einer beispielsweise Natriumbicarbonat oder ein anderes säurebindendes Mittel und die erfindungsgemässe Verbindung enthaltenden Druckpaste bedruckt und die erfindungsgemässe Verbindung durch anschliessendes Dämpfen bei 101 bis 103 °C auf der Faser fixiert wird, oder Zweiphasen-Verfahren sein, nach denen das Material beispielsweise mit neutraler oder schwach saurer Druckfarbe, die die erfindungsgemässe Verbindung enthält, bedruckt wird und sodann die erfindungsgemässe Verbindung durch Hindurchführen des bedruckten Materials durch ein heisses elektrolythaltiges alkalisches Bad oder durch Überklotzen mit einer alkalischen elektrolythaltigen Klotzflotte und anschliessendem Verweilen dieses überklotzten Materials oder anschliessendem Dämpfen oder anschliessender Behandlung mit Trockenhitze auf dem Material fixiert wird. Sowohl in der Färberei als auch in der Druckerei sind die mit den erfindungsgemässen Verbindungen erhaltenen Fixiergrade hoch.

Bei der Fixierung mittels Trockenhitze nach den üblichen Thermofixierverfahren verwendet man Heissluft von 120 bis 200 °C. Neben dem üblichen Wasserdampf von 101 bis 103 °C kann auch überhitzter Dampf und Druckdampf von Temperaturen bis zu 160 °C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natrium-trichloracetat, Wasserglas und Trinatriumphosphat.

Durch die Behandlung der erfindungsgemässen Verbindungen mit den säurebindenden Mitteln, gegebenenfalls unter Wärmeeinwirkung, werden die erfindungsgemässen Verbindungen (Farbstoffe) chemisch an die Faser gebunden; insbesondere die Cellulosefärbungen zeigen nach der üblichen Nachbehandlung durch Spülen zur Entfernung von nicht fixierten Farbstoffanteilen ausgezeichnete Nassechtheiten.

Für das coloristische Verhalten der erfindungsgemässen Verbindungen ist besonders hervorzuheben, dass sie sich durch gute Stabilität in Druckpasten und Klotzflotten, auch in Anwesenheit von Alkali, durch ein sehr gutes Ziehvermögen aus langer Flotte, durch guten Aufbau und hohe Fixiergeschwindigkeit nach den üblichen Färbe- und Druckverfahren, besonders bei niederen Temperaturen (d.h. Raumtemperatur und bis 50 °C), durch eine gleiche Farbtiefe beim Färben auf Baumwolle und Regeneratcellulosefasern, durch ein egales Warenbild der mit ihnen hergestellten Färbungen und Drucke und ebenfalls durch einen

gleichmässigen Ausfall der Färbungen aus langer Flotte bei Zugabe verschiedener Mengen an Elektrolyten auszeichnen.

Die Färbungen auf Polyurethanfasern und Polyamidfasern werden üblicherweise aus saurem Milieu ausgeführt. So kann man beispielsweise dem Färbebad Essigsäure und/oder Ammoniumsulfat oder Essigsäure und Ammoniumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifach molaren Menge einer Aminobenzolsulfonsäure und/oder einer Aminonaphthalinsulfonsäure oder auf Basis eines Umsetzungsproduktes von beispielsweise Stearylamin mit Äthylenoxid. In der Regel wird das zu färbende Material bei einer Temperatur von etwa 40 °C in das zuerst schwach alkalisch eingestellte Bad eingebracht, dort einige Zeit darin bewegt, das Färbebad dann auf einen schwach sauren, vorzugsweise schwach essigsauren pH-Wert eingestellt und die eigentliche Färbung bei einer Temperatur zwischen 60 und 98 °C durchgeführt. Die Färbungen können aber auch bei Siedetemperatur oder bei Temperaturen bis zu 120 °C (unter Druck) ausgeführt werden. Anschliessend kann eine Nachbehandlung in ammoniakalischem Bad erfolgen.

Die mit den erfindungsgemässen Verbindungen hergestellten Färbungen und Drucke zeichnen sich durch sehr reine, vorwiegend blaue Farbtöne aus. Insbesondere die Färbungen und Drucke auf Cellulosefasermaterialien besitzen, wie bereits erwähnt, eine hohe Farbstärke, ebenso eine sehr gute Licht-, gute Nasslicht- und Schweisslichtechtheit, gute Hypochloritbleichechtheit und Chlorbadewasserechtheit, sehr gute Bügel-, Überfärbe- und Reibechtheit und weitere vorzügliche Nassechtheiten, wie Wasch-, Walk-, Alkali-, Säure- und Schweissechtheiten. Nicht fixierte Anteile an Farbstoff lassen sich leicht und vollständig wieder aus dem Fasermaterial auswaschen, was eine wesentliche Voraussetzung für die guten Nassechtheiten der erhältlichen Färbung ist. Des weiteren sind die Färbungen gegen die üblichen Kunstharzappreturen stabil. Ein Teil der erfindungsgemässen Verbindungen (Farbstoffe) sind in der Reinheit des Farbtones und wichtigen Echtheitseigenschaften mit Reaktivfarbstoffen der Anthrachinonreihe vergleichbar.

Die nachstehenden Beispiele dienen zur Erläuterung der Erfindung. Die darin genannten Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmässig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, wie Natrium- oder Kaliumsalze, in die Synthese eingesetzt werden.

Die Absorptionsmaxima ($\lambda_{max}$) der erfindungsgemässen Verbindungen werden in wässriger Lösung bestimmt.

Beispiel 1

35,6 Teile des Hydrazons aus Phenylhydrazin-2,5-disulfonsäure und Benzaldehyd werden in 200 Teilen Wasser von 20 bis 25 °C angeschlämmt und durch Zugabe einer wässrigen Natronlauge bei einem pH-Wert von 6,5 bis 7 gelöst. Die Lösung wird bei einer Temperatur von 5 bis 15 °C mit der wässrigen Diazoniumsalzlösung aus 4-β-Sulfatoäthylsulfonyl-2-amino-phenol-6-sulfonsäure, die durch übliche Diazotierung in wässriger Lösung von 37,7 Teilen dieses Aminophenols erhalten wurde, und anschliessend tropfenweise bei 10 bis 15 °C mit 100 Volumenteilen einer wässrigen 1-molaren Kupfersulfatlösung innerhalb von 15 min versetzt, wobei man mit insgesamt 18 Teilen Natriumcarbonat den pH-Wert zwischen 4,0 und 6,5 hält. Man rührt 1 h bis zur Beendigung der Kupplungsreaktion bei Raumtemperatur nach, heizt sodann die Reaktionsmischung auf 40–50 °C hoch, rührt diese Lösung eine Stunde weiter, klärt dann mit Kieselgur, fällt die gebildete Kupferkomplex-Formazanverbindung mittels Natriumchlorid aus, filtriert sie ab, wäscht sie mit verdünnter wässriger Natriumchloridlösung und trocknet sie bei 60 bis 80 °C.

Es wird ein dunkles, elektrolythaltiges Pulver des Alkalimetallsalzes (Natriumsalz) der Verbindung entsprechend der allgemeinen Formel (1g)

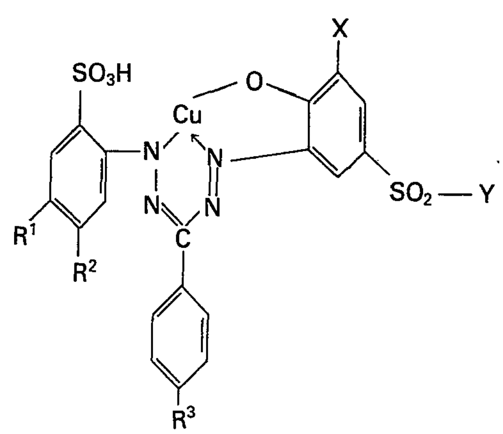

(1g)

in welcher $R^2$ eine Sulfogruppe, $R^1$ und $R^3$ jedes ein Wasserstoffatom, X eine Sulfogruppe und Y die β-Sulfatoethylgruppe bedeutet, erhalten, das sich in Wasser mit dunkelblauer Farbe löst ($\lambda_{max}$ = 598 nm). Diese Verbindung eignet sich sehr gut als Farbstoff und färbt Baumwolle und regenerierte Cellulosefasern aus langer Flotte und besonders im Zweiphasen-Kaltverweilverfahren in Gegenwart eines säurebindenden Mittels mit hoher Fixiergeschwindigkeit in reinen blauen Farbtönen. Die in üblicher Weise nach 10minütigem Seifen

und Spülen mit Wasser nachbehandelten Färbungen zeigen sich als sehr licht- und nassecht. Von den Nassechtheiten können insbesondere die Wasch-, Walk- und Schweissechtheiten, die Nasslicht- und Schweisslichtechtheit und die gute Stabilität von Drucken gegen saure Hydrolyse hervorgehoben werden.

Beispiel 2

Aus 26,8 Teilen Phenylhydrazin-2,5-disulfonsäure und 11 Teilen Benzaldehyd wird in 200 Teilen Wasser bei 20 bis 60 °C, vorzugsweise 40 bis 55 °C, und bei einem pH-Wert zwischen 4 und 7, vorzugsweise 6, das entsprechende Phenylhydrazon hergestellt, das sodann mit wässriger Natronlauge bei einem pH-Wert von 6,5 bis 7 gelöst wird. Zu dieser Lösung lässt man gleichzeitig die wässrige, schwach saure (mit einem pH-Wert von 3 bis 4) Diazoniumsalzlösung des durch übliche Diazotierung von 29,7 Teilen 5-β-Sulfatoäthylsulfonyl-2-aminophenol erhaltenen Diazoniumsalzes und 100 Volumenteile einer wässrigen 1-molaren Kupfersulfatlösung (die Diazoniumsalzlösung und die Kupfersulfatlösung können zuvor auch vereinigt werden) innerhalb von 10 bis 20 min unter Rühren hinzulaufen und hält dabei die Temperatur zwischen etwa 5 und 20 °C, vorzugsweise 10 bis 15 °C, und den pH-Wert mit etwa 19 Teilen Natriumcarbonat auf 4,5 bis 6,5. Diese Reaktionsmischung wird noch etwa eine Stunde bei etwa 15 bis 25 °C gerührt; man heizt dann auf 30 bis 50 °C, an, rührt noch bis zur Beendigung der Kupplungsreaktion nach und klärt sodann mit Kieselgur.

Die gebildete Kupferkomplexformazan-Verbindung wird bei einem pH-Wert von 5,5 mit Natriumchlorid ausgefällt, abfiltriert, mit verdünnter wässriger Natriumchloridlösung gewaschen und bei 80 °C gut getrocknet.

Es wird ein dunkles Pulver erhalten, das das Alkalimetallsalz (Natriumsalz) der Verbindung der Formel

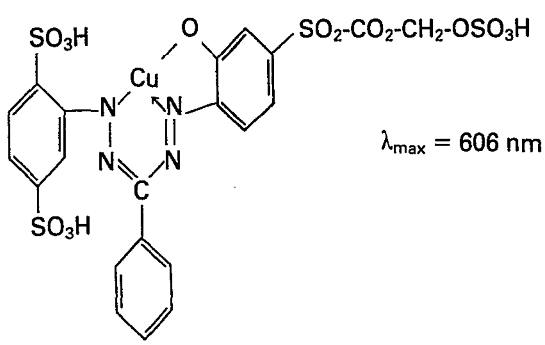

$\lambda_{max} = 606$ nm

zusammen mit Elektrolyt (Natriumchlorid) enthält. Diese Kupferkomplexformazanverbindung eignet sich sehr gut als wasserlöslicher Farbstoff zum Färben von Cellulosefasermaterialien und Polyamidfasermaterialien. Nach üblichen Applizier- und Fixiermethoden erhält man kräftige, klare blaue Färbungen und Drucke mit hoher Farbstärke und sehr guten Licht- und Nassechtheiten. Insbesondere im Zweiphasen-Kaltverweil-Verfahren zeichnet sie sich durch eine schnelle Fixierung aus. Von den Nassechtheiten sind insbesondere die schon in Beispiel 1 für den dortigen Farbstoff erwähnten Echtheiten hervorzuheben.

Beispiel 3

35,6 Teile des Hydrazons aus Phenylhydrazin-2-sulfonsäure und Benzaldehyd-4-sulfonsäure werden in 250 Teilen Wasser von 15 bis 25 °C aufgeschlämmt und mit wässriger Natronlauge bei einem pH-Wert von 6,5 bis 7 gelöst. 150 Volumenteile einer wässrigen Kupfersulfatlösung, die 25 Teile kristallisiertes Kupfersulfat enthält, werden hinzugegeben, wobei der pH-Wert bei 4 bis 6 gehalten wird. Diese Reaktionslösung versetzt man sodann mit der wässrigen Lösung des aus 37,7 Teilen 4-β-Sulfatoäthylsulfonyl-2-aminophenol-6-sulfonsäure durch übliche Diazotierung erhaltenen Diazoniumsalzes; bei Zugabe der Diazoniumsalzlösung wird mit Natriumcarbonat ein pH-Wert von 5,0 bis 6,5 g gehalten. Man rührt das Reaktionsgemisch eine Stunde zur Beendigung der Kupplungsreaktion und Metallisierungsreaktion nach und erwärmt es dann auf 40 bis 60 °C, rührt noch eine Stunde, klärt mit Kieselgur und fällt mittels Natriumchlorid die gebildete Kupferkomplexformazanverbindung aus, filtriert sie ab, wäscht mit verdünnter wässriger Natriumchloridlösung und trocknet bei 60 °C.

Diese erfindungsgemässe Kupferkomplexverbindung entspricht, in Form der freien Säure geschrieben, der im Beispiel 1 angegebenen allgemeinen Formel (1g), in welcher $R^1$ und $R^2$ jedes ein Wasserstoffatom, $R^3$ eine Sulfogruppe, X eine Sulfogruppe und Y die β-Sulfatoethylgruppe bedeuten. Sie besitzt sehr gute Farbstoffeigenschaften und färbt Cellulosefasermaterialien nach üblichen Applikations- und Fixierverfahren für faserreaktive Farbstoffe in rotstichig blauen Tönen mit guten Echtheiten, insbesondere guten Lichtechtheiten. $\lambda_{max} = 593$ nm.

Beispiel 4

35,6 Teile des Hydrazons aus Phenylhydrazin-2,5-disulfonsäure und Benzaldehyd werden zusammen mit 25 Teilen kristallisiertem Kupfersulfat zu der wässrigen Lösung des aus 39,3 Teilen 1-Amino-2-hydroxy-3-sulfo-benzol-5-β-thiosulfato-äthylsulfon durch übliche Diazotierung erhaltenen Diazoniumsalzes gegeben. Mit Natriumcarbonat wird ein pH-Wert von 4,5 bis 6,5 gehalten. Man rührt das Reaktionsgemisch eine Stunde zur Beendigung der Kupplungsreaktion und Metallisierungsreaktion nach, erwärmt es sodann auf 30 bis 60 °C, filtriert, fällt mittels Natriumchlorid die gebildete erfindungsgemässe Kupferkomplexformazanverbindung aus, filtriert ab, wäscht mit verdünnter wässriger Natriumchloridlösung und trocknet bei 80 °C.

Die neue Kupferkomplexverbindung entspricht, in Form der freien Säure geschrieben, der in Beispiel 1 angegebenen allgemeinen Formel (1g), in welcher $R^2$ eine Sulfogruppe, $R^1$ und $R^3$ jedes ein Wasserstoffatom, X eine Sulfogruppe und Y die β-Thiosulfatoethylgruppe bedeuten.

Sie besitzt sehr gute Farbstoffeigenschaften, löst sich in Wasser mit blauer Farbe und besitzt in der Güte seiner färberischen Eigenschaften und der Echtheitseigenschaften der mit ihr hergestellten Färbungen und Drucke ähnlich gute Vorzüge wie der in Beispiel 1 beschriebene erfindungsgemässe Formazanfarbstoff. $\lambda_{max}$ = 598 nm.

Beispiel 5

Zu einer Lösung von 20 bis 25 °C von 35,6 Teilen des Hydrazons aus Phenylhydrazin-2,4-disulfonsäure und Benzaldehyd in 200 Teilen Wasser werden gleichzeitig die wässrige Diazoniumsalzlösung des durch übliche Diazotierung von 27,9 Teilen 1-Amino-2-hydroxy-3-sulfobenzol-5-vinylsulfon erhaltenen Diazoniumsalzes und 100 Volumenteile einer wässrigen 1-molaren Kupfersulfatlösung (die Diazoniumsalzlösung und die Kupfersulfatlösung können zuvor auch vereinigt werden) innerhalb von 5 bis 10 min eingerührt, wobei die Temperatur zwischen etwa 5 und 20 °C vorzugsweise 10 bis 15 °C und der pH-Wert mit etwa 19 Teilen Natriumcarbonat auf 4,5 bis 6,5 gehalten wird. Diese Reaktionsmischung lässt man noch etwa eine Stunde bei etwa 15 bis 25 °C rühren, erwärmt sie auf 40 bis 60 °C und filtriert, fällt die gebildete Kupferkomplexformazan-Verbindung sodann mit Natriumchlorid aus, filtriert sie ab, wäscht den Rückstand mit verdünnter wässriger Natriumchloridlösung und trocknet bei 80 °C.

Es wird ein dunkles Pulver erhalten, das das Alkalimetallsalz (Natriumsalz) entsprechend einer Verbindung der im Beispiel 1 angegebenen allgemeinen Formel (1g), in welcher $R^1$ eine Sulfogruppe, $R^2$ und $R^3$ jedes ein Wasserstoffatom, X eine Sulfogruppe und Y die Vinylgruppe bedeuten, zusammen mit Elektrolyt (Natriumchlorid) enthält. Diese Kupferkomplexverbindung besitzt sehr gute Farbstoffeigenschaften und färbt in ähnlich guter Weise wie der Farbstoff des Beispiels 1 Cellulosefasermaterialien nach üblichen Applikations- und Fixierverfahren für faserreaktive Farbstoffe in grünstichig blauen Farbtönen mit guten Echtheiten, insbesondere guten Lichtechtheiten. $\lambda_{max}$ = 603 nm.

Beispiel 6

Es wird gemäss Beispiel 1 eine wässrige Lösung von 35,6 Teilen des Hydrazons aus Phenylhydrazin-2,5-disulfonsäure und Benzaldehyd hergestellt, zu dieser zunächst bei einer Temperatur von bis zu 25 °C und einem pH-Wert zwischen 4,5 bis 6,5 eine wässrige Lösung des Diazoniumsalzes aus 37,7 Teilen 1-Amino-2-hydroxy-2-sulfo-benzol-5-β-sulfoäthylsulfon und sodann innerhalb von 15 min bei einer Temperatur von 10 bis 15 °C 100 Volumenteile einer wässrigen 1-molaren Kupfersulfatlösung tropfenweise hinzugegeben; der pH-Wert wird jeweils mittels Natriumcarbonat bei 4,5 bis 6,5 gehalten. Man rührt zur Beendigung der Kupplung eine bis zwei Stunden bei Raumtemperatur nach und stellt mit Natriumcarbonat auf einen pH-Wert von 6,8 bis 7,2 ein.

Die in der Lösung enthaltene erfindungsgemässe β-Sulfatoäthylsulfonyl-Kupferkomplex-Formazanverbindung soll nun in die entsprechende Vinylsulfonyl-Verbindung übergeführt werden. Hierzu erwärmt man die Lösung auf 50 bis 55 °C und gibt ihr 21 Teile Natriumcarbonat in 76 Teilen Wasser innerhalb von 5 bis 10 min hinzu; hierbei steigt der pH-Wert auf etwa 9,2 an. Zur vollständigen Umsetzung wird 30 bis 40 min gerührt, sodann mit 20 Volumenteilen einer etwa 17%igen wässrigen Salzsäure bei einer Temperatur von 50 bis 55 °C ein pH-Wert von 6,8 bis 7,2 eingestellt.

Diese erfindungsgemässe Vinylsulfonyl-Verbindung (analog der des Beispiels 5) wird nun wie folgt in die erfindungsgemässe Verbindung mit der β-Thiosulfatoethylsulfonylgruppe übergeführt: Die Lösung wird zunächst auf 70 bis 75 °C erwärmt; 37,5 Teile Natriumthiosulfat (krist.) werden zugegeben, und die Lösung wird bei einem pH-Wert von 5,7 bis 6,2 vier Stunden gerührt, wobei der angegebene pH-Bereich durch portionsweise Zugabe von 40 Volumenteilen einer wässrigen 50%igen Essigsäure gehalten wird. Anschliessend gibt man Kieselgur hinzu, klärt die Lösung und versetzt das Filtrat mit Natriumchlorid in einer Menge von 15%, bezogen auf das Volumen des Filtrats. Man lässt es unter Rühren abkühlen, saugt die ausgeschiedene Verbindung ab und trocknet sie bei 80 °C.

Man erhält ein elektrolytisches dunkles Pulver mit der im Beispiel 4 beschriebenen erfindungsgemässen β-Thiosulfatoethylsulfonyl-Kupferkomplexformazanverbindung (vorwiegend als Natriumsalz) mit gleich guten Farbstoffeigenschaften; sie färbt dementsprechend nach den üblichen Applikations- und Fixiermethoden für faserreaktive Farbstoffe in gleicher Weise Cellulosefasermaterialien in tiefen reinen blauen Farbtönen mit den im Beispiel 4 erwähnten sehr guten Licht- und Nassechtheiten. $\lambda_{max}$ = 598 nm.

Beispiel 7

Zu einer auf einen pH-Wert zwischen 3 und 4 gestellten Diazoniumsalzlösung aus 37,7 Teilen 4-β-Sulfatoethylsulfonyl-2-aminophenol-6-sulfonsäure, die durch übliche Diazotierung in etwa 500 Teilen wässriger Lösung hergestellt wurde, gibt man 35,6 Teile der neutralen Hydrazonverbindung aus Phenylhydrazin-2,5-disulfonsäure und Benzaldehyd und anschliessend 25 Teile Kupfersulfatpentahydrat innerhalb von 15 min zu, wobei der pH-Wert mit etwa 10 Teilen wasserfreiem Natriumcarbonat zwischen 4,0 und 6,0 gehalten wird. Man rührt bei Raumtemperatur 2 bis 3 h bis zur Beendigung der Kupplungs- und Kupferungsreaktion nach, klärt sodann mit Kieselgur und arbeitet analog Beispiel 1 auf. Es wird die in Beispiel 1 beschriebene Kupferformazanverbindung mit den dort beschriebenen guten Farbstoffeigenschaften erhalten.

Beispiele 8 bis 90

Weitere erfindungsgemässe Kupferkomplexformazanverbindungen sind in den nachfolgenden Tabellenbeispielen mit Hilfe ihrer Ausgangskomponenten beschrieben. Sie lassen sich in erfindungsgemässer Weise, beispielsweise gemäss einer der in den obigen Ausführungsbeispielen beschriebenen Verfahrensvarianten, in ebenfalls guter Ausbeute durch Umsetzen einer kupferabgebenden Verbindung und der in den nachfolgenden Beispielen jeweils erwähnten Ausgangsverbindungen [der Arylhydrazinverbindung entsprechend der allgemeinen Formel (4), der Aldehydverbindung entsprechend der allgemeinen Formel (5) und der Aminophenol-Verbindung entsprechend der allgemeinen Formel (3), wobei die in den Tabellenbeispielen als (A), (B) und (C) angegebenen Verbindungen die später angegebene Struktur besitzen] herstellen. Sie besitzen ebenfalls gute färberische Eigenschaften und liefern Färbungen und Drucke auf Polyamid- und Polyurethanfasermaterialien, insbesondere auf Cellulosefasermaterialien, mit den in dem jeweiligen Tabellenbeispiel angegebenen Farbtönen in guten Echtheiten.

In der Spalte «Aminophenol (3)» der nachstehenden Tabelle haben die Abkürzungen (A), (B) und (C) die folgende Bedeutung:

(A) ist: 4-(β-Sulfatoethylsulfonyl)-2-aminophenol-6-sulfonsäure

(B) ist: 4-(β-Sulfatoethylsulfonyl)-2-aminophenol

(C) ist: 5-(β-Sulfatoethylsulfonyl)-2-aminophenol

Verbindungen der allgemeinen Formel (1) aus:

| Bsp. | Hydrazinkomponente (4) | Aldehydkomponente (5) | Amino-phenol (3) | Farbton aus Cellulose ($\lambda_{max}$) |
|---|---|---|---|---|
| 8 | Phenylhydrazin-2,5-disulfonsäure | 4-Chlor-benzaldehyd | (A) | rotstichig blau (600 nm) |
| 9 | dito | dito | (B) | dito (590) |
| 10 | dito | dito | (C) | dito (608) |
| 11 | dito | 4-Methyl-benzaldehyd | (A) | dito (604) |
| 12 | dito | dito | (B) | dito (597) |
| 13 | dito | dito | (C) | dito (612) |
| 14 | dito | 4-Methoxy-benzaldehyd | (A) | grünstichig blau (610) |
| 15 | dito | dito | (B) | dito (603) |
| 16 | dito | dito | (C) | dito (618) |
| 17 | dito | 3-Methoxy-benzaldehyd | (A) | rotstichig blau |
| 18 | dito | dito | (B) | dito |
| 19 | dito | dito | (C) | dito |
| 20 | dito | 2-Methoxy-benzaldehyd | (A) | dito (584) |
| 21 | dito | dito | (B) | dito (578) |
| 22 | dito | dito | (C) | dito (592) |
| 23 | dito | 4-Sulfo-benzaldehyd | (A) | dito (593) |
| 24 | dito | dito | (B) | dito (586) |
| 25 | dito | dito | (C) | dito (600) |
| 26 | Phenylhydrazin-2,5-disulfonsäure | Benzaldehyd | (B) | rotstichig blau (592 nm) |
| 27 | dito | 3-Sulfo-benzaldehyd | (A) | grünstichig blau (595) |
| 28 | dito | dito | (B) | dito (587) |
| 29 | dito | dito | (C) | dito (600) |
| 30 | dito | 1-Naphthaldehyd | (A) | dito (588) |
| 31 | dito | dito | (B) | dito |
| 32 | dito | dito | (C) | dito |
| 33 | Phenylhydrazin-2,4-disulfonsäure | 4-Chlor-benzaldehyd | (A) | grünstichig blau (600) |
| 34 | dito | dito | (B) | dito (592) |
| 35 | dito | dito | (C) | dito (610) |
| 36 | dito | 4-Methyl-benzaldehyd | (A) | dito (606) |
| 37 | dito | dito | (B) | dito (598) |
| 28 | dito | dito | (C) | dito (614) |
| 39 | dito | 4-Methoxy-benzaldehyd | (A) | dito |
| 40 | dito | dito | (B) | dito |
| 41 | dito | dito | (C) | dito |
| 42 | dito | 3-Methoxy-benzaldehyd | (A) | dito |
| 43 | dito | dito | (B) | dito |
| 44 | dito | dito | (C) | dito |
| 45 | dito | 2-Methoxy-benzaldehyd | (A) | dito |
| 46 | dito | dito | (B) | dito |
| 47 | dito | dito | (C) | dito |

Verbindungen der allgemeinen Formel (1) aus:
(Fortsetzung)

| Bsp. | Hydrazinkomponente (4) | Aldehydkomponente (5) | Amino-phenol (3) | Farbton aus Cellulose ($\lambda_{max}$) |
|---|---|---|---|---|
| 48 | Phenylhydrazin-2,4-disulfonsäure | 4-Sulfobenzaldehyd | (A) | grünstichig blau |
| 49 | dito | dito | (B) | dito |
| 50 | dito | dito | (C) | dito |
| 51 | dito | 3-Sulfo-benzaldehyd | (A) | dito (600 nm) |
| 52 | dito | dito | (B) | dito (592) |
| 53 | dito | dito | (C) | dito (607) |
| 54 | dito | Benzaldehyd | (A) | dito (603) |
| 55 | dito | dito | (B) | dito (596) |
| 56 | dito | dito | (C) | dito (611) |
| 57 | dito | 1-Naphthaldehyd | (A) | dito |
| 58 | dito | dito | (B) | dito |
| 59 | dito | dito | (C) | dito |
| 60 | Phenylhydrazin-2-sulfonsäure | Benzaldehyd | (A) | rotstichig blau (597) |
| 61 | dito | dito | (B) | dito (590) |
| 62 | dito | dito | (C) | grünstichig blau (603) |
| 63 | dito | 4-Sulfo-benzaldehyd | (B) | rotstichig blau (585) |
| 64 | dito | dito | (C) | dito (599) |
| 65 | dito | 3-Sulfo-benzaldehyd | (A) | grünstichig blau |
| 66 | dito | dito | (B) | dito (589) |
| 67 | dito | dito | (C) | dito |
| 68 | dito | 2-Sulfo-benzaldehyd | (A) | rotstichig blau |
| 69 | Phenylhydrazin-2-sulfonsäure | 2-Sulfo-benzaldehyd | (B) | rotstichig blau |
| 70 | dito | dito | (C) | dito |
| 71 | dito | 4-Chlor-benzaldehyd | (A) | dito |
| 72 | dito | 4-Methyl-benzaldehyd | (A) | dito |
| 73 | dito | 4-Methoxy-benzaldehyd | (A) | dito |
| 74 | dito | 3-Methoxy-benzaldehyd | (A) | dito |
| 75 | dito | 2-Methoxy-benzaldehyd | (A) | dito |
| 76 | dito | 4-Methyl-benzaldehyd-3-sulfonsäure | (A) | dito |
| 77 | dito | dito | (B) | dito |
| 78 | dito | dito | (C) | dito |
| 79 | dito | 2-Chlor-benzaldehyd-5-sulfonsäure | (A) | dito |
| 80 | dito | dito | (B) | dito |
| 81 | dito | dito | (C) | dito |
| 82 | dito | 2,4-Disulfo-benzaldehyd | (A) | dito |
| 83 | dito | dito | (B) | dito |
| 84 | dito | dito | (C) | dito |
| 85 | 4-Chlor-phenylhydrazin-2-sulfonsäure | Benzaldehyd-4-sulfonsäure | (B) | dito |
| 86 | 4-Methoxy-phenylhydrazin-2-sulfonsäure | Benzaldehyd-3-sulfonsäure | (A) | grünstichig blau |
| 87 | 5-Hydroxy-phenylhydrazin-2-sulfonsäure | Benzaldehyd | (A) | dito |
| 88 | 4-Nitrophenyl-hydrazin-2-sulfonsäure | Benzaldehyd-3-sulfonsäure | (C) | blaustichig grün |
| 89 | 4-Methyl-phenylhydrazin-2-sulfonsäure | Benzaldehyd-4-sulfonsäure | (B) | rotstichig blau |
| 90 | 2-Naphthylhydrazin-1,5-disulfonsäure | Benzaldehyd | (A) | grünstichig blau |

Anwendungsbeispiel 1

Zwecks Färbung von 10 Teilen eines Garnes aus Wolle wird ein wässriges Bad hergestellt, das aus 0,25 Volumenteilen einer 60%igen wässrigen Essigsäure, 0,15 Teilen eines handelsüblichen Egalisierhilfsmittels für Wolle und 0,3 Teilen Ammoniumsulfat in 400 Teilen Wasser besteht. Die Wolle wird bei einer Temperatur von 30–40 °C und einem pH-Wert des Bades von 5–5,2 darin gut benetzt. Dem Bad wird sodann eine Lösung von 0,2 Teilen des Vinylsulfonyl-Kupferkomplexformazanfarbstoffes von Beispiel 6 in 20 Teilen Wasser unter Rühren zugegeben. Man bewegt die Wolle weiterhin darin und lässt die Temperatur 5 min bei 30 bis 40 °C, erhitzt sodann das Färbebad innerhalb von 40 min auf 85 °C, färbt bei dieser Temperatur 10 min weiter und erhitzt sodann das Färbebad innerhalb von 10 min zum Sieden. Es wird 1 h lang kochend weitergefärbt. Anschliessend wird das Bad auf 80 °C abgekühlt. Der verwendete Farbstoff ist auf der Wolle sehr gut aufgezogen. Die Nachbehandlung des gefärbten Wollgarns kann deshalb im selben Bad erfolgen. Man gibt Ammoniak bis auf einen pH-Wert von 8–8,5 hinzu und behandelt das Material 15 min bei diesem pH und bei einer Temperatur von 80 °C. Man nimmt es heraus, spült es mit warmem und kaltem Wasser und trocknet es. Es wird eine farbstarke blaue Färbung mit sehr guten Licht- und Nassechtheiten erhalten.

Anwendungsbeispiel 2

Zur Färbung eines Baumwollgewebes wird eine wässrige Klotzflotte hergestellt, die im Liter 40 g des Farbstoffes von Beispiel 1, 100 g Harnstoff, 30 g wasserfreies Natriumsulfat und 16 Volumenteile einer wässrigen 32,5%igen Natronlauge enthält. Das Baumwollgewebe wird bei Zimmertemperatur mit einer Flottenaufnahme von 80% des Gewichtes des Baumwollgewebes foulardiert, auf eine Docke aufgewickelt, in eine Plastikfolie gehüllt und 24 h lang bei Raumtemperatur liegengelassen. Während dieser Zeit fixiert der Farbstoff. Nach dem Seifen und Spülen in üblicher Weise erhält man eine farbstarke brillante blaue Färbung des Baumwollgewebes, die die im Beispiel 1 genannten guten Gebrauchs- und Fabrikationsechtheiten aufweist.

Anwendungsbeispiel 3

Zur Färbung eines Baumwollgewebes wird ein wässriges Färbebad hergestellt, das in 2000 Volumenteilen 5 Teile des Farbstoffes von Beispiel 26, 10 Teile wasserfreies Natriumsulfat, 10 Teile wasserfreies Natriumcarbonat und 4 Volumenteile einer 32,5%igen wässrigen Natronlauge gelöst enthält. In dieses Färbebad werden 100 Teile eines Baumwollgewebes gegeben, das bei einer Temperatur von 40 °C zwischen 60 und 90 min gefärbt wird. Nach Seifen und Spülen in üblicher Weise erhält man eine farbstarke, brillante blaue Färbung mit den in der Beschreibung angegebenen sehr guten Gebrauchs- und Fabrikationsechtheiten.

Anwendungsbeispiel 4

Zum Bedrucken eines mercerisierten Baumwollgewebes wird eine Druckpaste verwendet, die auf 1000 Teile 30 Teile des Farbstoffes von Beispiel 1, 50 Teile Harnstoff, 375 Teile Wasser, 500 Teile einer neutralen 4%igen wässrigen Alginatverdickung, 15 Teilen Natriumbicarbonat und 10 Teile des Natriumsalzes der m-Nitrobenzoesäure enthält. Das Baumwollgewebe wird in üblicher Weise mit dieser Druckpaste bedruckt und nach dem Trocknen 10 bis 15 min lang mit Wasserdampf von 101 bis 103 °C gedämpft. Nach diesem Fixierungsvorgang wird das Gewebe in üblicher Weise durch Spülen mit kaltem und warmem Wasser, durch Seifen bei Kochtemperatur und erneutes Spülen mit Wasser und anschliessendes Trocknen fertiggestellt. Man erhält einen farbstarken brillanten blauen Druck, der die im Beispiel 1 genannten, sehr guten Licht- und Nassechtheiten besitzt.

Anwendungsbeispiel 5

Es werden 30 Teile des Farbstoffes von Beispiel 1 in 200 Teilen Wasser von 70 °C gelöst; diese Lösung wird in 500 Teile einer neutralen oder schwach sauren, 4%igen Alginatverdickung eingerührt. Mit 270 Teilen Wasser wird diese verdickte Farbstofflösung auf 1000 Teile aufgefüllt. Mit der so hergestellten Druckpaste wird in üblicher Weise ein Gewebe aus mercerisierter Baumwolle bedruckt, das anschliessend getrocknet und zur Fixierung des Farbstoffes durch ein 90 bis 105 °C heisses wässriges Fixierbad geführt wird, das in 1000 Teilen Wasser 100 Teile Natriumchlorid, 150 Teile wasserfreies Natriumcarbonat, 50 Teile wasserfreies Kaliumcarbonat und 70 Volumenteile einer 33%igen wässrigen Natronlauge enthält. Die Fixierung erfolgt hierbei bereits in wenigen Sekunden, so dass die Durchführung des bedruckten Gewebes sehr schnell ausgeführt werden kann. Nach dieser Fixierbehandlung wird das Gewebe in üblicher Weise durch Spülen mit kaltem Wasser, durch heisses Waschen, erneutes Spülen mit Wasser und Trocknen fertiggestellt. Man erhält ein egales, blaues Druckmuster mit den in Beispiel 1 genannten, sehr guten Licht- und Nassechtheiten.

Anwendungsbeispiel 6

Es werden 40 Teile des Farbstoffes von Beispiel 1 in 200 Teilen Wasser von 70 °C gelöst; diese Lösung wird in 500 Teile einer neutralen oder schwach sauren, 4%igen Alginatverdickung eingerührt. Mit 260 Teilen Wasser wird diese verdickte Farbstofflösung auf 1000 Teile aufgefüllt. Mit der so hergestellten Druckpaste wird in üblicher Weise ein Gewebe aus mercerisierter Baumwolle bedruckt, das anschliessend getrocknet und zur Fixierung des Farbstoffes mit einer Klotzflotte, bestehend aus 100 Teilen Soda, 100 Teilen Kochsalz, 100 Teilen Pottasche, 100 Volumenteilen Natronlauge 38° Be und 600 Teilen Wasser bei Zimmertemperatur mit einer Flottenaufnahme von ca. 60 bis 70% des Gewichtes des Baumwollgewebes foulardiert wird. Bereits nach 5 bis 10 min Verweilzeit an der Luft ist die Fixierung erfolgt. Nach dieser Fixierbehandlung wird das Gewebe in üblicher Weise durch Spülen mit kaltem Wasser, durch heisses Waschen, erneutes Spülen mit Wasser und Trocknen fertiggestellt. Man erhält ein egales, blaues Druckmuster mit sehr guten Licht- und Nassechtheiten.

Anwendungsbeispiel 7

Verfährt man in einer der oben beschriebenen Verfahrensweisen gemäss der vorliegenden Erfindung zum Färben und Bedrucken von Wolle oder von synthetischen Polyamidmaterialien oder von Cellulosefasermaterialien, beispielsweise analog den obigen Anwendungsbeispielen 1 bis 6, und setzt hierfür als Farbstoff erfindungsgemäss eine der in den anderen vorherigen Ausführungsbeispielen oder nachfolgenden Tabellenbeispielen beschriebenen erfindungsgemässen Kupferkomplexformazanfarbstoffe ein, so erhält man ebenfalls kräftige Färbungen und Drucke mit guten Echtheiten und den für diese Farbstoffe angegebenen Farbtönen.

**Patentansprüche**

1. Kupferkomplex-Formazan-Verbindung der allgemeinen Formel (1)

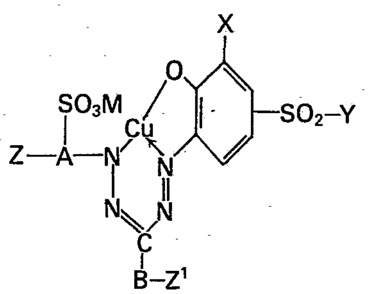

(1)

in welcher bedeuten:

A ist ein Benzol- oder ein Naphthalinkern, die beide zwingend durch die angegebene Sulfogruppe $-SO_3M$ (mit M der nachstehend angegebenen Bedeutung) in ortho-Stellung zum N-Atom der Hydrazonkomponente substituiert sind und die durch einen bis drei Substituenten aus der Gruppe Halogen, Nitro, Alkyl von 1 bis 5 C-Atomen, niederes Alkylaminoalkyl, Alkoxy von 1 bis 4 C-Atomen, Hydroxy, Alkylsulfonyl von 1 bis 4 C-Atomen, Phenylsulfonyl, Sulfamoyl, N-Mono- und N,N-Dialkylsulfamoyl mit jweils 1 bis 4 C-Atomen im Alkyl, niederes Alkanoylamino, Aroylamino, N-Mono- und N,N-Dialkylamino mit jeweils 1 bis 4 C-Atomen im Alkyl, Phenyl und Phenylsulfamoyl substituiert sein können;

B ist ein Benzol- oder ein Naphthalinkern, die beide durch Substituenten aus der Gruppe Hydroxy, Nitro, Halogen, Alkyl von 1 bis 5 C-Atomen, Alkoxy von 1 bis 4 C-Atomen, Carbalkoxy mit 1 bis 4 C-Atomen im Alkylrest, Amino, N-Mono- und N,N-Dialkylamino mit jeweils 1 bis 4 C-Atomen im Alkyl und Phenylsulfamoyl substituiert sein können, oder

B ist der Rest des gegebenenfalls durch niederes Alkyl, niederes Alkoxy, Chlor, Benzyl, Phenethyl und/oder Phenyl substituierten Furans, Thiophens, Pyrrols, Imidazols, Pyrazols, Pyridins, Chinolins oder Benzimidazols, oder

B ist eine direkte Bindung oder ein gerad- oder verzweigtkettiger Alkanrest von 1 bis 8 C-Atomen oder ein gerad- oder verzweigtkettiger Alkenrest von 2 bis 8 C-Atomen, wobei diese Alkan- und Alkenreste noch durch den Phenylrest substituiert sein können, der wiederum durch Substituenten aus der Gruppe Methyl, Ethyl, Methoxy, Ethoxy, Fluor, Chlor, Brom und Sulfamoyl substituiert sein kann;

M ist ein Wasserstoffatom oder das Äquivalent eines Metalls;

X ist ein Wasserstoffatom oder eine Sulfogruppe;

Z ist ein Wasserstoffatom oder eine wasserlöslichmachende Gruppe, die – neben der zwingend geforderten Sulfogruppe in o-Stellung zum N-Atom der Hydrazonkomponente A – an A einmal oder zweimal an ein aliphatisches oder aromatisches Kohlenstoffatom von A, vorzugsweise an einen aromatischen Kern, gebunden ist, und

$Z^1$ ist ein Wasserstoffatom oder eine wasserlöslichmachende Gruppe, die an B einmal oder zweimal an ein aliphatisches oder aromatisches Kohlenstoffatom von B, vorzugsweise an einen aromatischen Kern, gebunden ist, wobei Z und $Z^1$ zusammen nicht mehr als drei Sulfogruppen bedeuten, falls X eine Sulfogruppe ist;

Y ist die Vinylgruppe oder eine Gruppe der Formel $-CH_2-CH_2-E$, in welcher E einen alkalisch eliminierbaren Substituenten darstellt.

2. Kupferkomplex-Formazan-Verbindung nach Anspruch 1, dadurch gekennzeichnet, dass A den Benzolkern bedeutet, der durch einen Substituenten aus der Gruppe Chlor, Brom, Nitro, Methyl, Ethyl, Methoxy, Ethoxy und Carboxy substituiert sein kann, B einen Benzolkern bedeutet, der durch 1 oder 2 Substituenten aus der Gruppe Chlor, Methyl, Methoxy, Ethoxy, Carboxy und Nitro substituiert sein kann, Z die in Anspruch 1 genannte Bedeutung besitzt und an A in m- oder p-Stellung zum N-Atom der Hydrazonkomponente gebunden ist, $Z^1$ die in Anspruch 1 genannte Bedeutung besitzt und an B in m- oder p-Stellung zum C-Atom der Aldehydkomponente gebunden ist, Y die Vinylgruppe oder die β-Sulfatoethylgruppe bedeutet, wobei die Gruppe $-SO_2-Y$ an den Benzolkern in meta-Stellung zu X gebunden ist, falls X für eine Sulfogruppe oder ein Wasserstoffatom steht, und in ortho-Stellung zu X gebunden ist, falls X für ein Wasserstoffatom steht.

3. Kupferkomplex-Formazan-Verbindung nach Anspruch 1, dadurch gekennzeichnet, dass A einen Benzolkern darstellt, B einen Benzolkern bedeutet, der durch eine Methyl-, Methoxy- oder Ethoxygruppe oder ein Chloratom substituiert sein kann, Z für eine Sulfogruppe steht, $Z^1$ ein Wasserstoffatom oder eine Sulfogruppe ist und M und Y die in Anspruch 1 genannten Bedeutungen haben.

4. Kupferkomplex-Formazan-Verbindung nach Anspruch 1 der allgemeinen Formel

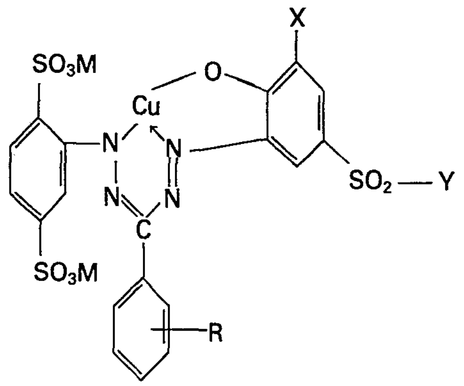

in welcher M die in Anspruch 1 genannte Bedeutung besitzt, X für ein Wasserstoffatom oder eine Sulfogruppe steht, Y die Vinylgruppe oder die β-Sulfatoethylgruppe ist und R ein Wasserstoffatom oder eine Methyl-, Ethyl-, Methoxy- oder Ethoxygruppe oder ein Chloratom oder eine Sulfogruppe bedeutet, wobei R in p-Stellung an den Benzolkern gebunden ist, oder, falls R gleich Sulfo ist, in p- oder m-Stellung gebunden ist.

5. Kupferkomplex-Formazan-Verbindung nach Anspruch 1 der allgemeinen Formel

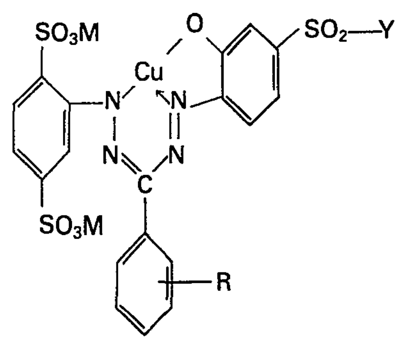

in welcher M die in Anspruch 1 genannte Bedeutung besitzt, X für ein Wasserstoffatom oder eine Sulfogruppe steht, Y die Vinylgruppe oder die β-Sulfatoethylgruppe ist und R ein Wasserstoffatom oder eine Methyl-, Ethyl-, Methoxy- oder Ethoxygruppe oder ein Chloratom oder eine Sulfogruppe bedeutet, wobei R in p-Stellung an den Benzolkern gebunden ist, oder, falls R gleich Sulfo ist, in p- oder m-Stellung gebunden ist.

6. Kupferkomplex-Formazan-Verbindung nach Anspruch 1 der allgemeinen Formel

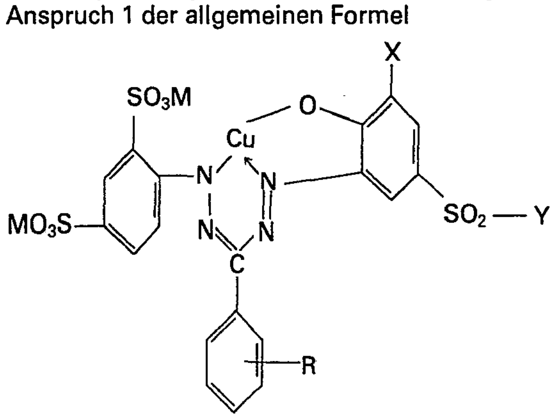

in welcher M die in Anspruch 1 genannte Bedeutung besitzt, X für ein Wasserstoffatom oder eine Sulfogruppe steht, Y die Vinylgruppe oder die β-Sulfatoethylgruppe ist und R ein Wasserstoffatom oder eine Methyl-, Ethyl-, Methoxy oder Ethoxygruppe oder ein Chloratom oder eine Sulfogruppe bedeutet, wobei R in p-Stellung an den Benzolkern gebunden ist, oder, falls R gleich Sulfo ist, in p- oder m-Stellung gebunden ist.

7. Kupferkomplex-Formazan-Verbindung nach Anspruch 1 der allgemeinen Formel

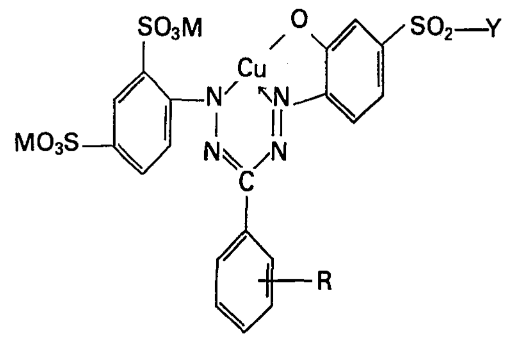

in welcher M die in Anspruch 1 genannte Bedeutung besitzt, X für ein Wasserstoffatom oder eine Sulfogruppe steht, Y die Vinylgruppe oder die β-Sulfatoethylgruppe ist und R ein Wasserstoffatom oder eine Methyl-, Ethyl-, Methoxy- oder Ethoxygruppe oder ein Chloratom oder eine Sulfogruppe bedeutet, wobei R in p-Stellung an den Benzolkern gebunden ist, oder, falls R gleich Sulfo ist, in p- oder m-Stellung gebunden ist.

8. Kupferkomplex-Formazan-Verbindung nach Anspruch 1 der allgemeinen Formel

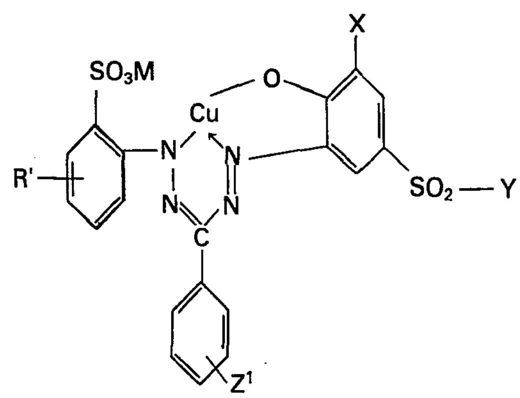

in welcher M die in Anspruch 1 genannte Bedeutung besitzt, X für ein Wasserstoffatom oder eine Sulfogruppe steht, Y die Vinylgruppe oder die β-Sulfatoethylgruppe ist, R' für ein Wasserstoffatom, ein Chloratom, eine Methyl-, Ethyl-, Methoxy- oder Ethoxygruppe steht und $Z^1$ eine in p- oder m-Stellung gebundene Sulfogruppe ist.

9. Kupferkomplex-Formazan-Verbindung nach Anspruch 1 der allgemeinen Formel

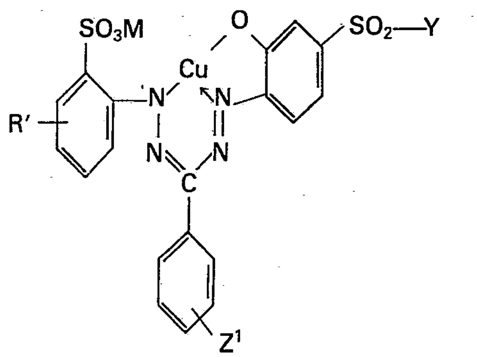

in welcher M die in Anspruch 1 genannte Bedeutung besitzt, X für ein Wasserstoffatom oder eine Sulfogruppe steht, Y die Vinylgruppe oder die β-Sulfatoethylgruppe ist, R' für ein Wasserstoffatom, ein Chloratom, eine Methyl-, Ethyl-, Methoxy- oder Ethoxygruppe steht und $Z^1$ eine in p- oder m-Stellung gebundene Sulfogruppe ist.

10. Kupferkomplex-Formazan-Verbindung nach Anspruch 1 oder 3, dadurch gekennzeichnet, dass die Gruppe $-SO_2$-Y an den Benzolkern in m-Stellung zu X gebunden ist, falls X für eine Sulfogruppe oder ein Wasserstoffatom steht und in ortho-Stellung zu X gebunden ist falls X für ein Wasserstoffatom steht.

11. Kupferkomplex-Formazan-Verbindung nach Anspruch 1, 2 oder 10, dadurch gekennzeichnet, dass Z 1 Sulfogruppe ist.

12. Kupferkomplex-Formazan-Verbindung nach Anspruch 1, 2, 10 oder 11, dadurch gekennzeichnet, dass $Z^1$ 1 Sulfogruppe ist.

13. Kupferkomplex-Formazan-Verbindung nach Anspruch 1, 10, 11 der 12, dadurch gekennzeichnet, dass A ein Benzolkern ist.

14. Kupferkomplex-Formazan-Verbindung nach Anspruch 1, 10, 11 oder 12, dadurch gekennzeichnet, dass A ein Naphthalinkern ist.

15. Kupferkomplex-Formazan-Verbindung nach Anspruch 4 oder 6, dadurch gekennzeichnet, dass X die Sulfogruppe ist.

16. Kupferkomplex-Formazan-Verbindung nach Anspruch 4, 5, 6 oder 7 oder 15, dadurch gekennzeichnet, dass R für Wasserstoff, Methyl, Chlor oder Sulfo steht.

17. Verbindung nach Anspruch 1 der allgemeinen Formel

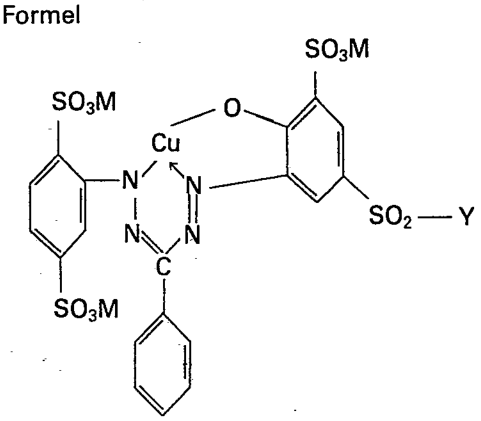

in welcher M für ein Wasserstoffatom oder ein Alkalimetall steht und Y die in Anspruch 1 genannte Bedeutung hat.

18. Kupferkomplex-Formazan-Verbindung nach Anspruch 1 oder nach einem der Ansprüche 10 bis 17, dadurch gekennzeichnet, dass Y für die Vinylgruppe oder die β-Sulfatoethylgruppe steht.

19. Kupferkomplex-Formazan-Verbindung nach einem der Ansprüche 1 bis 18, dadurch gekennzeichnet, dass M für ein Wasserstoffatom oder ein Alkalimetallatom steht.

20. Verfahren zur Herstellung einer in Anspruch 1 genannten und definierten Verbindung der allgemeinen Formel (1), dadurch gekennzeichnet, dass man eine aromatische Hydrazonverbindung der allgemeinen Formel (2)

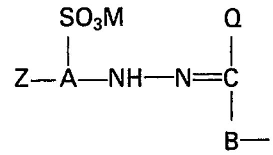

(2)

in welcher A, B, M, Z, und $Z^1$ die in Anspruch 1 genannten Bedeutungen haben und Q ein Wasserstoffatom oder einen durch Azokupplung ersetzbaren Substituenten bedeutet, mit der Diazoniumverbindung eines aromatischen Amins der Formel (3)

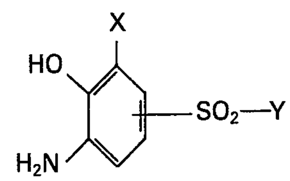

(3)

in welcher X und Y die in Anspruch 1 genannte Bedeutung haben, und mit einem kupferabgebenden Mittel umsetzt, wobei man die Komponenten so auswählt, dass Z und $Z^1$ im Verhältnis zu X die in Anspruch 1 genannten Bedingungen erfüllen, oder dass man zur Herstellung derjenigen Verbindungen (1) mit Y gleich der Vinylgruppe eine Verbindung der allgemeinen Formel (1) mit Y gleich der β-Sulfatoethylsulfonylgruppe unter Einwirkung eines alkalisch wirkenden Mittels in wässriger Lösung bei einem pH-Wert zwischen 8 und 10 und bei erhöhter Temperatur in die Vinylsulfonylverbindung überführt, oder dass man zur Herstellung derjenigen Verbindungen (1) mit Y gleich der β-Thiosulfatoethylgruppe eine Verbindung der allgemeinen Formel (1) mit Y gleich der Vinylgruppe mit einem Salz der Thioschwefelsäure in wässriger, schwach saurer Lösung umsetzt, oder dass man zur Herstellung derjenigen Verbindungen der allgemeinen Formel (1) mit Y gleich einer Ethylgruppe, die in β-Stellung durch eine veresterte Hydroxygruppe substituiert ist, gemäss der erstgenannten Verfahrensweise eine aromatische Hydrazonverbindung der allgemeinen Formel (2) mit der Diazoniumverbindung eines aromatischen Amins der allgemeinen Formel (3), in welcher X ein Wasserstoffatom oder eine Sulfogruppe ist und Y jedoch die β-Hydroxyethylgruppe bedeutet, und mit einem kupferabgebenden Mittel umsetzt und anschliessend die so hergestellte Kupferkomplex-Formazan-Verbindung entsprechend der allgemeinen Formel (1) mit Y jedoch gleich der

β-Hydroxyethylgruppe mit einem Veresterungsmittel, beispielsweise mit einem Sulfatierungs-, Phosphatierungs- oder Acylierungsmittel einer Sulfon- oder Carbonsäure, in die entsprechende Esterverbindung der allgemeinen Formel (1), wie beispielsweise der Verbindung der allgemeinen Formel (1) mit Y gleich der β-Sulfatoethyl- oder β-Phosphatoethylgruppe oder der β-Acyloxygruppe einer Alkan- oder Arylcarbonsäure oder -sulfonsäure, überführt.

21. Verwendung der in Anspruch 1 definierten Kupferkomplex-Formazan-Verbindung oder der nach Anspruch 20 hergestellten Kupferkomplex-Formazan-Verbindung als Farbstoff.

22. Verwendung nach Anspruch 21 zum Färben (Kolorieren) von hydroxy-, amino- und/oder carbonamidgruppenhaltigem Material, insbesondere Fasermaterial.

**Claims**

1. A copper complex formazan compound of the general formula (1)

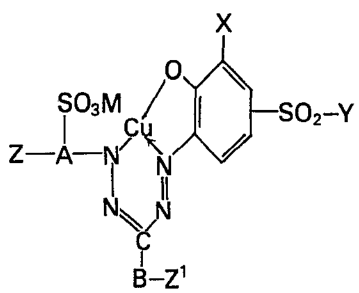
(1)

in which

A is a benzene or naphthalene nucleus both of which are necessarily substituted by the indicated sulfo group $-SO_3M$ (where M has the meaning given below) in the ortho-position relative to the N-atom of the hydrazone component, and which may be substituted by one to three substituents from the group comprising halogen, nitro, alkyl of 1 to 5 carbon atoms, lower alkylaminoalkyl, alkoxy of 1 to 4 carbon atoms, hydroxy, alkylsulfonyl of 1 to 4 carbon atoms, phenylsulfonyl, sulfamoyl, N-mono- and N,N-dialkylsulfamoyl with in each case 1 to 4 carbon atoms in the alkyl, lower alkanoylamino, aroylamino, N-mono- and N,N-dialkylamino with in each case 1 to 4 carbon atoms in the alkyl, phenyl and phenylsulfamoyl;

B is a benzene or a naphthalene nucleus both of which may be substituted by substituents from the group comprising hydroxy, nitro, halogen, alkyl of 1 to 5 carbon atoms, alkoxy of 1 to 4 carbon atoms, carbalkoxy having 1 to 4 carbon atoms in the alkyl radical, amino, N-mono- and N,N-dialkylamino with in each case 1 to 4 carbon atoms in the alkyl, and phenylsulfamoyl, or

B is the radical of a furan, thiophene, pyrrole, imidazole, pyrazole, pyridine, quinoline or benzimidazole, each being optionally substituted by lower alkyl, lower alkoxy, chlorine, benzyl, phenethyl and/or phenyl, or

B is a direct bond or a straight-chain or branched alkane radical of 1 to 3 carbon atoms or a straight-chain or branched alkene radical of 2 to 8 carbon atoms, and these alkane and alkene radicals may be further substituted by the phenyl radical which in turn may be substituted by substituents from the group comprising methyl, ethyl, methoxy, ethoxy, fluorine, chlorine, bromine and sulfamoyl;

M is a hydrogen atom or the equivalent of a metal;

X is a hydrogen atom or a sulfo group;

Z is a hydrogen atom or a group which confers watersolubility which – besides the sulfo group necessarily required in the o-position relative to the N-atom of the hydrazone component A – is bonded to A once or twice on an aliphatic or aromatic carbon atom of A, preferably on an aromatic nucleus, and

$Z^1$ is a hydrogen atom or a group which confers watersolubility which is bonded to B once or twice on an aliphatic or aromatic carbon atom of B, preferably on an aromatic nucleus;

Z and $Z^1$ together denoting not more than three sulfo groups if X is a sulfo group;

Y is the vinyl group or a group of the formula $-CH_2-CH_2-E$, in which E is a substituent which can be eliminated under alkaline conditions.

2. A copper complex formazan compound according to claim 1, characterized by that A denotes the benzene nucleus which may be substituted by a substituent from the group comprising chlorine, bromine, nitro, methyl, ethyl, methoxy, ethoxy and carboxy, B denotes a benzene nucleus which may be substituted by 1 or 2 substituents from the group comprising chlorine, methyl, methoxy, ethoxy, carboxy and nitro, Z has the meaning given in claim 1 and is bonded to A in the m- or p-position relative to the N-atom of the hydrazone component, $Z^1$ has the meaning given in claim 1 and is bonded to B in the m- or p-position relative to the carbon atom of the aldehyde component, and Y denotes the vinyl group or the β-sulfatoethyl group, the group $-SO_2-Y$ being bonded to the benzene nucleus in the meta-position relative to X if X represents a sulfo group or a hydrogen atom, and in the ortho-position relative to X if X represents a hydrogen atom.

3. A copper complex formazan compound according to claim 1, characterized by that A represents a benzene nucleus, B denotes a benzene nucleus which may be substituted by a methyl, methoxy or ethoxy group or a chlorine atom, Z represents a sulfo group, $Z^1$ is a hydrogen atom or a sulfo group and M and Y have the meanings given in claim 1.

4. A copper complex formazan compound according to claim 1, of the general formula

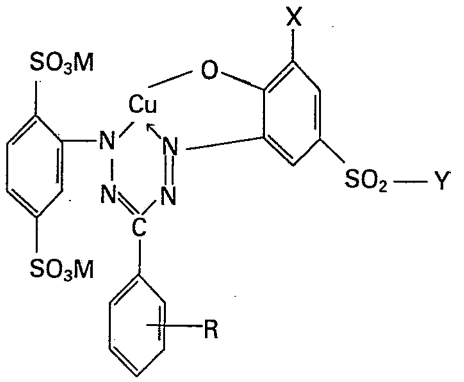

in which M has the meaning given in claim 1, X represents a hydrogen atom or a sulfo group, Y is the vinyl group or the β-sulfatoethyl group and R denotes a hydrogen atom or a methyl, ethyl, methoxy or ethoxy group or a chlorine atom or a sulfo group, and R is bonded to the benzene nucleus in the p-position, or, if R is sulfo, in the p- or m-position.

5. A copper complex formazan compound according to claim 1, of the general formula

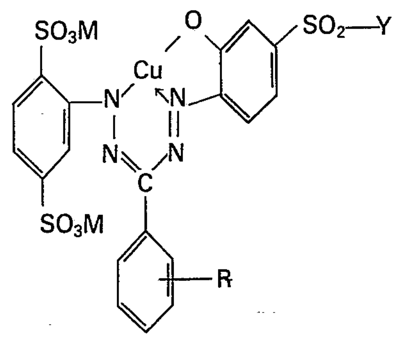

in which M has the meaning given in claim 1, X represents a hydrogen atom or a sulfo group, Y is the vinyl group or the β-sulfatoethyl group and R denotes a hydrogen atom or a methyl, ethyl, methoxy or ethoxy group or a chlorine atom or a sulfo group, and R is bonded to the benzene nucleus in the p-position, or, if R is sulfo, in the p- or m-position.

6. A copper complex formazan compound according to claim 1, of the general formula

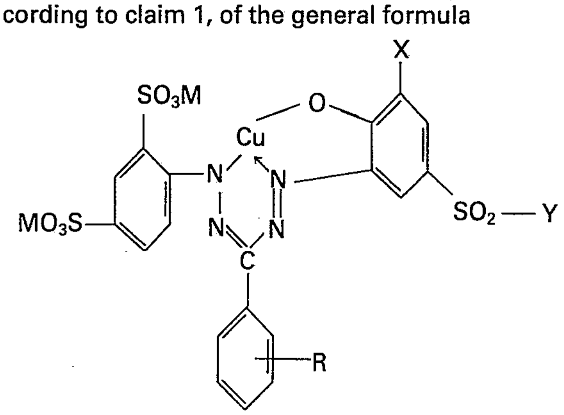

in which M has the meaning given in claim 1, X represents a hydrogen atom or a sulfo group, Y is the vinyl group or the β-sulfatoethyl group and R denotes a hydrogen atom or a methyl, ethyl, methoxy or ethoxy group or a chlorine atom or a sulfo group and R ist bonded to the benzene nucleus in the p-position, or, if R is sulfo, in the p- or m-position.

7. A copper complex formazan compound according to claim 1, of the general formula

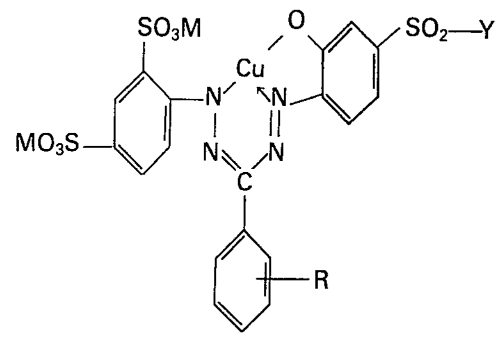

in which M has the meaning given in claim 1, X represents a hydrogen atom or a sulfo group, Y is the vinyl group or the β-sulfatoethyl group and R denotes a hydrogen atom or a methyl, ethyl, methoxy or ethoxy group or a chlorine atom or a sulfo group, and R is bonded to the benzene nucleus in the p-position, or, if R is sulfo, in the p- or m-position.

8. A copper complex formazan compound according to claim 1, of the general formula

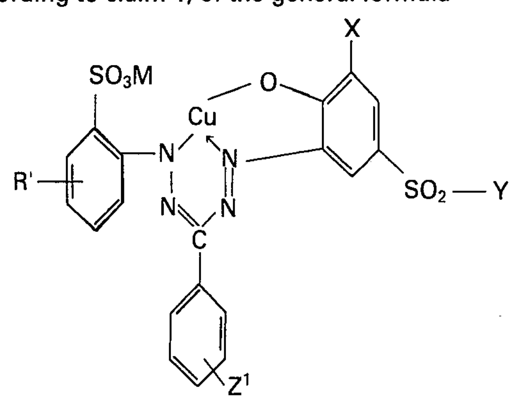

in which M has the meaning given in claim 1, X is a hydrogen atom or a sulfo group, Y is the vinyl group or the β-sulfatoethyl group, R′ represents a hydrogen atom, a chlorine atom or a methyl, ethyl, methoxy or ethoxy group and $Z^1$ is a sulfo group bonded in the p- or m-position.

9. A copper complex formazan compound according to claim 1, of the general formula

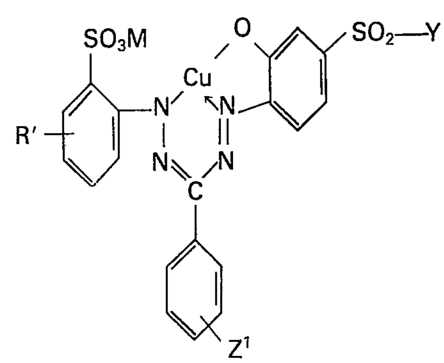

in which M has the meaning given in claim 1, X is a hydrogen atom or a sulfo group, Y is the vinyl group or the β-sulfatoethyl group, R′ represents a hydrogen atom, a chlorine atom or a methyl, ethyl, methoxy or ethoxy group and $Z^1$ is a sulfo group bonded in the p- or m-position.

10. A copper complex formazan compound according to claim 1 or 3, characterized by that the group $-SO_2-Y$ is bonded to the benzene nucleus in the m-position relative to X if X represents a sulfo group or a hydrogen atom, and is bonded in the ortho-position relative to X if X represents a hydrogen atom.

11. A copper complex formazan compound according to claim 1, 2 or 10, characterized by that Z is 1 sulfo group.

12. A copper complex formazan compound according to claim 1, 2, 10 or 11, characterized by that $Z^1$ is 1 sulfo group.

13. A copper complex formazan compound according to claim 1, 10, 11 or 12, characterized by that A is a benzene nucleus.

14. A copper complex formazan compound according to claim 1, 10, 11 or 12, characterized by that A is a naphthalene nucleus.

15. A copper complex formazan compound according to claim 4 or 6, characterized by that X is the sulfo group.

16. A copper complex formazan compound as claimed in claim 4, 5, 6 or 7 or 15, characterized by that R represents hydrogen, methyl, chlorine or sulfo.

17. A compound according to claim 1, of the general formula

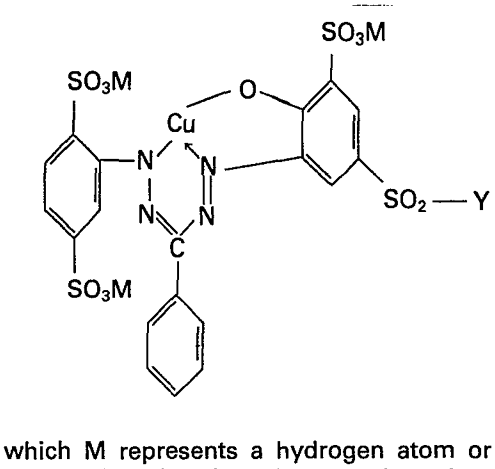

in which M represents a hydrogen atom or an alkali metal and Y has the meaning given in claim 1.

18. A copper complex formazan compound according to claim 1 or any one of claims 10 to 17, characterized by that Y represents the vinyl group or the β-sulfatoethyl group.

19. A copper complex formazan compound according to any one of claims 1 to 18, characterized by that M represents a hydrogen atom or an alkali metal atom.

20. A process for the preparation of a compound of the general formula (1) mentioned and defined in claim 1, characterized by that an aromatic hydrazone compound of the general formula (2)

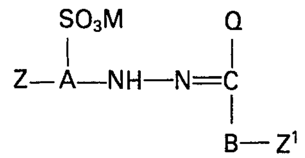

(2)

in which A, B, M, Z and $Z^1$ have the meanings given in claim 1 and Q denotes a hydrogen atom or a substituent which can be replaced by azo coupling, is reacted with the diazonium compound of an aromatic amine of the formula (3)

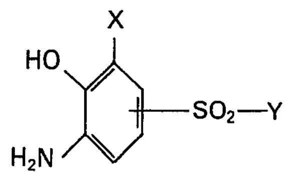

(3)

in which X and Y have the meaning given in claim 1, and with a copper-donating agent, the components being chosen such that Z and $Z^1$ fulfill the conditions mentioned in claim 1 in relation to X, or that, for the preparation of those compounds (1) where Y is the vinyl group, a compound of the general formula (1) where Y is the β-sulfatoethylsulfonyl group, is converted into the vinylsulfonyl compound under the action of an alkaline agent in aqueous solution at a pH value between 8 and 10 and at elevated temperature, or that, for the preparation of those compounds (1) where Y is the β-thiosulfatoethyl group, a compound of the general formula (1) where Y is the vinyl group, is reacted with a salt of thiosulfuric acid in aqueous, weakly acid solution, or that, for the preparation of those compounds of the general formula (1) where Y is an ethyl group which is substituted in the β-position by an esterified hydroxy group, an aromatic hydrazone compound of the general formula (2) is reacted with the diazonium compound of an aromatic amine of the general formula (3) in which X is a hydrogen atom or a sulfo group but Y denotes the β-hydroxyethyl group, and with a copper-donating agent in accordance with the first procedure mentioned, and the copper complex formazan compound thus prepared corresponding to the general formula (1), but where Y is the β-hydroxyethyl group, is then converted by means of an esterifying agent, for example a sulfating, phosphating or acylating agent of a sulfonic or carboxylic acid, into the corresponding ester compound of the general formula (1), such as, for example, the compound of the general formula (1) where Y is the β-sulfatoethyl or β-phosphatoethyl group or the β-acyloxy group of an alkane- or arylcarboxylic acid or -sulfonic acid.

21. The use of a copper complex formazan compound defined in claim 1 or of a copper complex formazan compound prepared according to claim 20, as a dyestuff.

22. The use according to claim 21 for dyeing (coloring) material, in particular fiber material, containing hydroxy, amino and/or carboxamide groups.

**Revendications**

1. Composé formazanique complexe du cuivre qui répond à la formule générale 1:

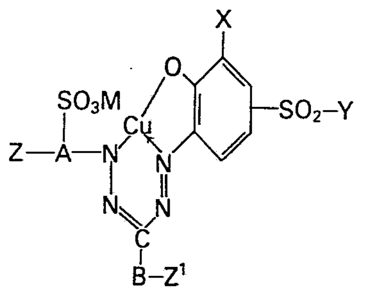

(1)

dans laquelle:

A représente un noyau benzénique ou un noyau naphtalénique qui portent obligatoirement l'un et l'autre le radical sulfo $-SO_3M$ représenté (dans lequel M a la signification indiquée ci-dessous) en position ortho par rapport à l'atome d'azote de la composante hydrazone et qui peuvent porter chacun de 1 à 3 substituants pris dans l'ensemble constitué par les halogènes, le nitro, les alkyles en $C_1$–$C_5$, les alkylaminoalkyles inférieurs, les alcoxy en $C_1$–$C_4$, l'hydroxy, les alkylsulfonyles en $C_1$–$C_4$, le phénylsulfonyle, le sulfamoyle, les N-Mono- et N,N-dialkyl-sulfamoyles dont l'alkyle ou chacun des alkyles contient de 1 à 4 atomes de carbone, les alcanoylamino inférieurs, les aroylamino, les N-mono- et N,N-dialkylamino dont l'alkyle ou chacun des alkyles contient de 1 à 4 atomes de carbone, le phényle et le phénylsulfamoyle,

B représente un noyau benzénique ou un noyau naphtalénique qui peuvent porter chacun des substituants pris dans l'ensemble constitué par l'hydroxy, le nitro, les halogènes, les alkyles en $C_1$–$C_5$, les alcoxy en $C_1$–$C_4$, les alcoxycarbonyles dont la partie alkyle contient de 1 à 4 atomes de carbone, l'amino, les N-Mono- et N,N-dialkylamino dont l'alkyle ou chacun des alkyles contient de 1 à 4 atomes de carbone et le phénylsulfamoyle ou un radical du furanne, du thiophène, du pyrrole, de l'imidazole, du pyrazole, de la pyridine, de la quinoléine ou du benzimidazole éventuellement porteur d'un alkyle inférieur, d'un alcoxy inférieur, d'un chlore, d'un benzyle, d'un phénéthyle et/ou d'un phényle, ou une liaison directe ou un radical d'alcane, linéaire ou ramifié, contenant de 1 à 8 atomes de carbone ou un radical d'alcène, linéaire ou ramifié, contenant de 2 à 8 atomes de carbone, ces radicaux d'alcane et d'alcène pouvant en outre porter un radical phényle, lequel peut, à son tour, porter des substituants pris dans d'ensemble constitué par les radicaux méthyle, éthyle, méthoxy, éthoxy, fluoro, chloro, bromo et sulfamoyle,

M représente un atome d'hydrogène ou l'équivalent d'un métal,

X représente un atome d'hydrogène ou un radical sulfo,

Z représente un atome d'hydrogène ou un radical hydrosolubilisant qui – en plus du radical sulfo obligatoire en position ortho relativement à l'atome d'azote de la composante hydrazone A – est lié à A, en un ou en deux exemplaires, par un atome de carbone aliphatique ou aromatique de A, de préférence à un noyau aromatique, et

$Z^1$ représente un atome d'hydrogène ou un radical hydrosolubilisant qui est lié à B, en un ou en deux exemplaires, par un atome de carbone aliphatique ou aromatique de B, de préférence à un noyau aromatique, avec la condition que Z et $Z^1$, considérés ensemble, ne représentent pas plus de 3 radicaux sulfo lorsque X désigne un radical sulfo, et

Y représente un radical vinyle ou un radical répondant à la formule $-CH_2-CH_2-E$ dans laquelle E représente un substituant éliminable en milieu alcalin.

2. Composé formazanique complexe du cuivre selon la revendication 1, caractérisé en ce que A représente un noyau benzénique qui peut porter un substituant pris dans l'ensemble constitué par le chlore, le brome et les radicaux nitro, méthyle, éthyle, méthoxy, éthoxy et carboxy, B représente un noyau benzénique qui peut porter un ou deux substituants pris dans l'ensemble constitué par le chlore et les radicaux méthyle, méthoxy, éthoxy, carboxy et nitro, Z a la signification qui lui a été donnée à la revendication 1 et est lié à A par la position méta ou para relativement à l'atome d'azote de la composante hydrazone, $Z^1$ a la signification qui lui a été donnée à la revendication 1 et est lié à B par la position méta ou para relativement à l'atome de carbone de la composante aldéhyde, et Y représente un radical vinyle ou un radical sulfato-2 éthyle, le radical $-SO_2-Y$ étant lié au noyau benzénique par la position méta relativement à X dans le cas où X représente un radical sulfo ou un atome d'hydrogène, et par la position ortho relativement à X lorsque X représente un atome d'hydrogène.

3. Composé formazanique complexe du cuivre selon la revendication 1, caractérisé en ce que A représente un noyau benzénique, B représente un noyau benzénique qui peut porter un radical méthyle, méthoxy ou éthoxy ou un atome de chlore, Z représente un radical sulfo, $Z^1$ représente un atome d'hydrogène ou un radical sulfo, et M et Y ont les significations qui leur ont été données à la revendication 1.

4. Composé formazanique complexe du cuivre selon la revendication 1, qui répond à la formule générale suivante:

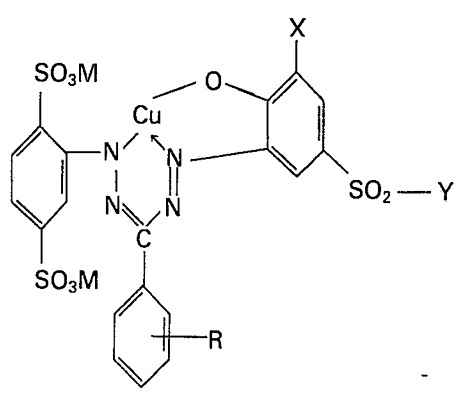

dans laquelle M a la signification donnée à la revendication 1, X représente un atome d'hydrogène ou un radical sulfo, Y représente un radical vinyle ou un radical sulfato-2 éthyle et R représente un atome d'hydrogène, un radical méthyle, éthyle, méthoxy ou éthoxy, un atome de chlore ou un radical sulfo, le substituant R se trouvant à la position para sur le noyau benzénique ou, dans le cas où R représente un radical sulfo, à la position para ou à une position méta.

5. Composé formazanique complexe du cuivre selon la revendication 1, qui répond à la formule générale suivante:

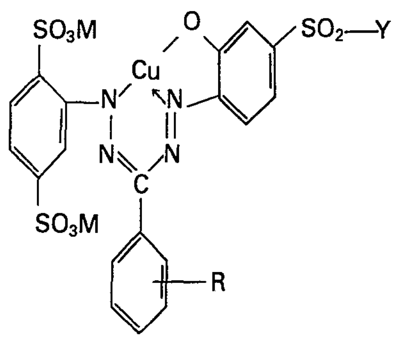

dans laquelle M a la signification donnée à la revendication 1, X représente un atome d'hydrogène ou un radical sulfo, Y représente un radical vinyle ou un radical sulfato-2 éthyle et R représente un atome d'hydrogène, un radical méthyle, éthyle, méthoxy ou éthoxy, un atome de chlore ou un radical sulfo, le substituant R se trouvant à la position para sur le noyau benzénique ou, lorsque R désigne un radical sulfo, à la position para ou à une position méta.

6. Composé formazanique complexe du cuivre selon la revendication 1, qui répond à la formule générale suivante:

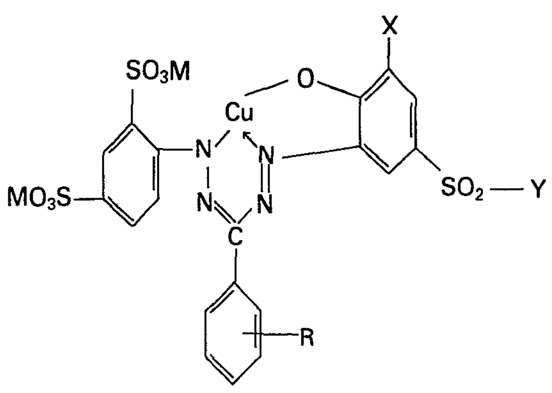

dans laquelle M a la signification donnée à la revendication 1, X représente un atome d'hydrogéne ou un radical sulfo, Y représente un radical vinyle ou un radical sulfato-2 éthyle et R représente un atome d'hydrogène, un radical méthyle, éthyle, méthoxy ou éthoxy, un atome de chlore ou un radical sulfo, le substituant R se trouvant à la position para sur le noyau benzénique ou, dans le cas où R désigne un radical sulfo, à la position para ou à une position méta.

7. Composé formazanique complexe du cuivre selon la revendication 1, qui répond à la formule générale suivante:

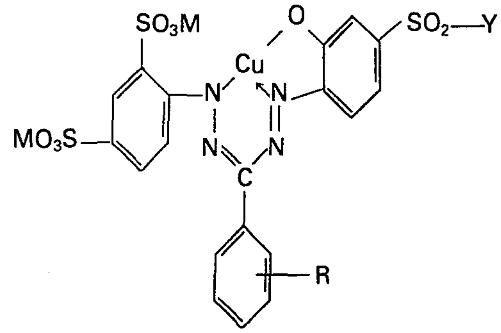

dans laquelle M a la signification donnée à la revendication 1, X représente un atome d'hydrogène ou un radical sulfo, Y représente un radical vinyle ou un radical sulfato-2 éthyle et R représente un atome d'hydrogène, un radical méthyle, éthyle, méthoxy ou éthoxy, un atome de chlore ou un radical sulfo, le substituant R se trouvant à la position para sur le noyau benzénique ou, dans le cas où R désigne un radical sulfo, à la position para ou à une position méta.

8. Composé formazanique complexe du cuivre selon la revendication 1, qui répond à la formule générale suivante:

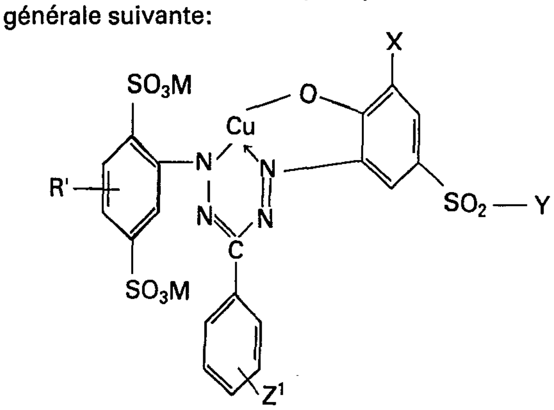

dans laquelle M a la signification donnée à la revendication 1, X représente un atome d'hydrogène ou un radical sulfo, Y représente un radical vinyle ou un radical sulfato-2 éthyle, R' représente un atome d'hydrogène ou de chlore ou un radical méthyle, éthyle, méthoxy ou éthoxy et $Z^1$ désigne un radical sulfo se trouvant à la position para ou à une position méta.

9. Composé formazanique complexe du cuivre selon la revendication 1, qui répond à la formule générale suivante:

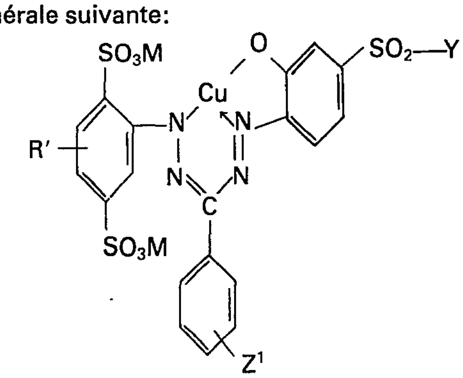

dans laquelle M a la signification donnée à la revendication 1, X représente un atome d'hydrogène ou un radical sulfo, Y représente un radical vinyle ou un radical sulfato-2 éthyle, R' représente un atome d'hydrogène ou de chlore ou un radical méthyle, éthyle, méthoxy ou éthoxy et $Z^1$ représente un radical sulfo occupant la position para ou une position méta.

10. Composé formazanique complexe du cuivre selon l'une des revendications 1 et 3, caractérisé en ce que le radical $-SO_2-Y$ se trouve, sur le noyau benzénique, à la position méta relativement à X dans le cas où X représente un radical sulfo ou un atome d'hydrogène, et à la position ortho relativement à X lorsque X représente un atome d'hydrogène.

11. Composé formazanique complexe du cuivre selon l'une quelconque des revendications 1, 2 et 10, caractérisé en ce que Z représente 1 radical sulfo.

12. Composé formazanique complexe du cuivre selon l'une quelconque des revendications 1, 2, 10 et 11, caractérisé en ce que $Z^1$ représente 1 radical sulfo.

13. Composé formazanique complexe du cuivre selon l'une quelconque des revendications 1, 10, 11 et 12, caractérisé en ce que A représente un noyau benzénique.

14. Composé formazanique complexe du cuivre selon l'une quelconque des revendications 1, 10, 11 et 12, caractérisé en ce que A représente un noyau naphtalénique.

15. Composé formazanique complexe du cuivre selon l'une des revendications 4 et 6, caractérisé en ce que X représente un radical sulfo.

16. Composé formazanique complexe du cuivre selon l'une quelconque des revendications 4, 5, 6, 7 et 15, caractérisé en ce que R représente un atome d'hydrogène ou de chlore ou un radical méthyle ou sulfo.

17. Composé selon la revendication 1 qui répond à la formule générale suivante:

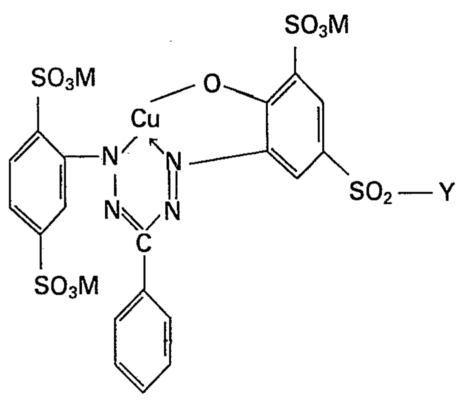

dans laquelle M représente un atome d'hydrogène ou un métal alcalin et Y a la signification donnée à la revendication 1.

18. Composé formazanique complexe du cuivre selon l'une quelconque des revendications 1 et 10 à 17, caractérisé en ce que Y représente un radical vinyle ou un radical sulfato-2 éthyle.

19. Composé formazanique complexe du cuivre selon l'une quelconque des revendications 1 à 18, caractérisé en ce que M représente un atome d'hydrogène ou un atome de métal alcalin.

20. Procédé de préparation de composés répondant à la formule générale 1 qui a été représentée et définie à la revendication 1, procédé caractérisé en ce que on fait réagir une hydrazone aromatique répondant à la formule générale 2

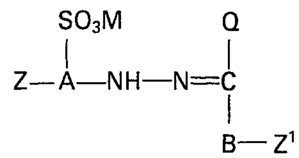

(2)

dans laquelle A, B, M, Z et $Z^1$ ont les significations données à la revendication 1 et Q représente un atome d'hydrogène ou un substituant remplaçable par copulation azoïque, avec le diazoïque d'une amine aromatique répondant à la formule 3

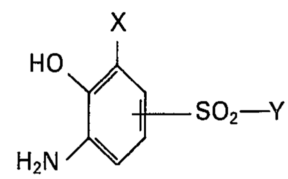

(3)

dans laquelle X et Y ont les significations données à la revendication 1, et avec un agent cédant de cuivre, les composantes étant choisies de telle façon que Z et $Z^1$ remplissent, relativement à X, les conditions énoncées à la revendication 1, ou pour préparer des composés (1) dans lesquels Y désigne un radical vinyle ou transforme un composé de formule générale 1 dans lequel Y désigne un radical sulfato-2 éthyle, en le soumettant à l'action d'un agent alcalin, en solution aqueuse, à un pH de 8 à 10 et à température élevée, en le composé vinylsulfonylique, ou pour préparer des composés (1) dans lesquels Y représente un radical thiosulfato-2 éthyle on fait réagir un composé de formule générale 1 dans lequel Y représente un radical vinyle avec un sel de l'acide thiosulfurique en solution aqueuse légèrement acide, ou pour préparer des composés de formule générale 1 dans lesquels Y représente un radical éthyle portant, en position β, un radical hydroxy estérifié, on fait réagir, selon le premier mode opératoire mentionné ci-dessus, une hydrazone aromatique de formule générale 2 avec le diazoïque d'une amine aromatique de formule générale 3 dans laquelle X représente un atome d'hydrogène ou un radical sulfo et Y représente toutefois un radical hydroxy-2 éthyle, et avec un agent cédant du cuivre, puis on transforme le composé formazanique complexe de cuivre ainsi préparé, qui répond à la formule générale 1 dans laquelle Y représente toutefois un radical hydroxy-2 éthyle, au moyen d'un agent d'estérification, par exemple d'un agent de sulfatation, d'un agent de phosphatation ou d'un agent d'acylation dérivant d'un acide sulfonique ou d'un acide carbocylique, en l'ester correspondant de formule générale 1, par exemple en un composé de formule générale 1 dans lequel Y représente un radical sulfato-2 éthyle, un radical phosphato-2 éthyle ou un radical acyloxy-2 éthyle dont la partie acyle dérive d'un acide alcanoïque, d'un acide arène-carboxylique, d'un acide alcane-sulfonique ou d'un acid arène-sulfonique.

21. Application du composé formazanique complexe de cuivre selon la revendication 1, ou du composé formazanique complexe de cuivre qui a été préparé selon la revendication 20, comme colorant.

22. Application selon la revendication 21, dans laquelle on teint (on colore) une matière contenant des radicaux hydroxy, amino et/ou carbamoyles, plus particulièrement une matière fibreuse de ce genre.